# EUROPÄISCHE PATENTSCHRIFT

(11) **EP 4 201 575 B1**
(45) Veröffentlichungstag und Bekanntmachung des Hinweises auf die Patenterteilung: **15.04.2026**
(21) Anmeldenummer: 22206384.4
(22) Anmeldetag: 09.11.2022
(51) Int. Cl.: B23K 26/03, B23K 26/046, B23K 26/06, B23K 26/082, B23K 26/08, B23K 26/16, B23K 26/36, B23K 26/53, B23K 26/70, B23K 37/02, B23K 103/00, C03C 23/00, B23K 26/402

(54) **LASERVORRICHTUNG UND DEREN VERWENDUNG ZUR BEARBEITUNG EINER GLASTAFEL**
LASER DEVICE AND USE THEREOF FOR PROCESSING A GLASS PANEL
DISPOSITIF LASER ET SON UTILISATION POUR LE TRAITEMENT D'UN PANNEAU DE VERRE

(30) Priorität: 23.12.2021 DE 102021215023
(43) Veröffentlichungstag der Anmeldung: 28.06.2023
(73) Patentinhaber: HEGLA boraident GmbH & Co. KG, 37688 Beverungen (DE)
(72) Erfinder: HÖTGER, Bernhard, 37697 Lauenförde (DE); RAINER, Thomas, 38855 Wernigerode OT Minsleben (DE)
(74) Vertreter: Dr. Solf & Zapf Patent- und Rechtsanwalts PartG mbB

(56) Entgegenhaltungen:
- WO-A1-2021/165064
- DE-A1- 102018 207 181
- DE-U1- 202006 006 823
- DE-U1- 202020 107 266
- US-A1- 2021 205 920
- US-B1- 6 486 435
- US-B1- 8 927 069

## Beschreibung

Die vorliegende Erfindung betrifft eine mobile Laservorrichtung zum Bearbeiten von in einem Objekt, vorzugsweise einem Fahrzeug, bevorzugt einem Zug, oder einem Bauwerk, bevorzugt einem Gebäude, eingebauten Glastafeln. Zudem betrifft die Erfindung die Verwendung der Laservorrichtung zur Bearbeitung einer Glastafel.

Als Flachglas wird jedes Glas in Form von Scheiben bzw. Tafeln bezeichnet, unabhängig vom angewandten Herstellungsverfahren.

Glastafeln können dabei aus einer einzigen Glasscheibe bzw. Glasplatte bestehen (Einscheibenglas) oder es kann sich um Verbundglas handeln. Unter einer Verbundglastafel versteht man im Allgemeinen eine aus zwei oder mehr Glasscheiben bzw. Glasplatten mit gleicher oder unterschiedlicher Dicke ausgebildete Glastafel, wobei die Glasscheiben durch eine Zwischenschicht aus Kunststoff miteinander verbunden sind.

Um Flachglastafeln mit Filter-, Spiegel-, Heizfunktionen oder sonstigen Funktionen zu versehen, werden die unterschiedlichsten, ein- oder mehrlagigen Funktionsbeschichtungen auf die Glasscheiben aufgebracht. Die Funktionen können dabei z.B. Wärmeschutz, Sonnenschutz, oder Beheizung sein. Bei Low-E-Glas (Low-E = Low-Emissivity = niedrige Wärmeabstrahlung) reduzieren eine oder mehrere Metallschichten den Emissionsgrad der Glasscheiben und dienen als Wärme- und/oder Sonnenschutzschicht.

In der Regel ist die funktionelle Beschichtung bzw. Funktionsbeschichtung eine einzelne Funktionsschicht oder ein Schichtaufbau mit mehreren Funktionsschichten mit einer Gesamtdicke < 2 µm. Der Schichtaufbau wird in der Regel durch Abscheidevorgänge, vorzugsweise Sputtern, erhalten.

Bei den einzelnen Funktionsschichten handelt es sich somit in der Regel um metallische und/oder keramische Schichten. Beispielsweise handelt es sich um metallische Niedrigemissionsschichten oder elektrische Heizschichten. Zwischen den einzelnen metallischen Funktionsschichten einer Funktionsbeschichtung können eine oder mehrere dielektrische (Funktions)schichten, z.B. aus einem Oxid, wie Aluminiumoxid, angeordnet sein. Zudem ist zwischen der Funktionsbeschichtung und der Glasoberfläche in der Regel eine Haftvermittlungsschicht aus Zinnoxid vorhanden.

Spezielle Verbundglastafeln weisen z. B. eine erste, insbesondere innere, Glasscheibe aus einer üblicherweise unbeschichteten Glasscheibe und eine zweite, insbesondere äußere, beschichtete, insbesondere mit einer Wärmeschutzschicht versehene, Glasscheibe auf.

Auch Fenstergläser von Zügen weisen in der Regel eine derartige, wärmeisolierende Funktionsbeschichtung auf. Problematisch dabei ist, dass die Funktionsbeschichtung zwar eine Energieeinsparung bewirkt, aber die Mobilfunkverbindung darunter leidet. Denn aufgrund der metallischen Funktionsbeschichtung wird ein faradayscher Käfig gebildet, der den Innenraum des Zuges vor elektromagnetischen Wellen abschirmt. Aufgrund dessen wurde von der ETH Zürich ein neues Fensterglas entwickelt, bei dem die Funktionsbeschichtung so verändert ist, dass sie für elektromagnetische Mobilfunkwellen und Licht durchlässiger ist (www.20min.ch_wissen_news_story_ETH-Superglas-macht-Handy.pdf). Der faradaysche Käfig wird unterbrochen, indem die metallische Funktionsschicht mit einem Laser bearbeitet wird. Es wird mittels des Lasers eine Struktur in die metallische Funktionsschicht graviert, wobei ca. 2,5 % der Oberfläche abgetragen werden.

Die US 8,927,069 B1 offenbart ebenfalls ein derartiges Verfahren und eine Vorrichtung zur Bearbeitung einer Low-E-Schicht einer Glastafel mittels Laserablation. Die mobile Vorrichtung kann auch zur Bearbeitung von bereits eingebauten Glastafeln einer Isolierverglasung verwendet werden.

Des Weiteren sind aus den beiden Druckschriften DE 10 2005 026 038 A1 und DE 10 2005 025 982 A1 Lasermarkierungsverfahren und - vorrichtungen zur Markierung von Glastafeln bekannt.

Gemäß der DE 10 2005 026 038 A1 wird mittels Laser eine glasartige Schicht mit Metall-Nanopartikeln auf die Oberfläche der Glasscheibe aufgebracht. Dazu wird ein Spender- bzw. Trägermedium in Kontakt mit der zu beschriftenden Glasscheibenoberfläche gebracht und durch laserstrahlinduzierte Prozesse eine Markierung auf der Glasscheibenoberfläche erzeugt.

Gemäß der DE 10 2011 085 714 A1 wird in einem ähnlichen Verfahren eine elektrische Kontaktierung einer Oberfläche eines Objektes hergestellt.

Und gemäß der DE 10 2005 025 982 A1 wird die Low-E-Funktionsbeschichtung einer Glasscheibe durch Laserstrahleinstrahlung so farblich verändert, dass eine Markierung erzeugt wird.

Und die DE 10 2018 217 970 A1 offenbart ein Verfahren und eine Vorrichtung zur Herstellung einer elektronischen Struktur auf einer Glasscheibe, die zumindest an einer ihrer beiden Glasscheibenoberflächen eine Funktionsbeschichtung mit mindestens einer elektrisch leitfähigen Funktionsschicht aufweist, wobei die Funktionsbeschichtung mittels Laserstrahlung derart strukturiert wird, dass die elektronische Struktur erzeugt wird. Die Laserstrukturierung erfolgt dabei durch Modifikation oder Abtragung der Funktionsbeschichtung.

Aus der WO 2021/165064 A1, welche die Basis für den Oberbegriff des Anspruchs 1 offenbart, ist eine Vorrichtung zum Entfernen eines Teils eines Beschichtungssystems eines mehrfach verglasten Fensters bekannt. Die Vorrichtung umfasst eine Entschichtungseinrichtung mit einer Laserquelle, zwei Motoren zum Verfahren der Entschichtungseinrichtung entlang einer X- und Y-Achse, eine Einrichtung zur Erkennung an welcher der Glasflächen sich das Beschichtungssystem befindet, und eine Einrichtung zur Bestimmung des Abstands zwischen der Entschichtungseinrichtung und der erkannten Glasfläche.

Weiter umfasst die Vorrichtung einen dritten Motor zum Verfahren der Entschichtungseinrichtung entlang einer Z-Achse.

Die US 2021/205920 A1 offenbart eine Bearbeitungsvorrichtung, aufweisend eine Lasereinrichtung zum Bestrahlen einer Oberfläche eines Objekts mit Bearbeitungsstrahlen, und eine Änderungseinrichtung zum Ändern einer relativen Positionsbeziehung zwischen Lichtkonzentrationspositionen der Bearbeitungsstrahlen in einer die Oberfläche des Objekts schneidenden Richtung. Die Bearbeitungsvorrichtung verändert die Dicke eines Teils, z.B. einer Farbschicht, des Objekts durch Bestrahlen der Oberfläche mit den Bearbeitungsstrahlen.

Die DE 20 2020 107 266 U1 offenbart eine Laserbearbeitungsanlage, aufweisend mindestens eine Basis und einen auf der Basis angebrachten Industrieroboter zur Positionierung und Ausrichtung eines Bearbeitungslasers der Laserbearbeitungsanlage relativ zu einem oder mehreren zu bearbeitenden Werkstücken. Der Industrieroboter ist sockelseitig auf einem plattenförmigen Adapter der Laserbearbeitungsanlage angebracht, der mittels lösbarer Befestigungsmittel passgenau mit einem an der Basis befindlichen Adaptergegenstück der Laserbearbeitungsanlage verbindbar ist, wobei die Basis wahlweise eine stationäre Basis oder eine mobile Basis ist.

Die US 6,486,435 B1 offenbart eine Vorrichtung zur Oberflächenstrukturierung von verlegten Fußbodenbelägen mit mindestens einem Laserstrahl, der intensitätsgesteuert mindestens eindimensional über die zu strukturierende Oberfläche bewegbar ist. Zumindest die Elemente zur Führung und Formung des Laserstrahls sind in einem mobilen Teil der Vorrichtung aufgenommen.

Die DE 20 2006 006 823 U1 offenbart eine Laserschutzvorrichtung in Form eines flexiblen Flächengebildes.

Zudem ist es auf dem Fachgebiet bekannt, die Glastafeln mit einer Innenmarkierung zu versehen, welche sich im Inneren der Glastafeln befindet. Die Innenmarkierung kann z.B. laserinduziert erfolgen (Forschungsvereinigung Feinmechanik, Optik und Medizintechnik e.V., "Untersuchung zur Materialreaktion im Innern optisch transparenter Materialien nach Ultrakurz-Laserpulsanregung: Generierung spannungsarmer Innenmarkierungen (micro-dots)).

Beispielsweise ist es bekannt, laserinduziert Mikrorisse im Glas zu erzeugen. Die erzeugten Strukturen streuen das Licht und sind so als Markierungen erkennbar und mit Code-Lesern auslesbar.

Zudem ist eine laserinduzierte Erzeugung von Farbzentren (Volumenfärbung) im Glas zur Innenmarkierung bekannt. Die Innenmarkierung von Glastafeln aufgrund der Bildung von Farbzentren beruht darauf, dass durch die Laserstrahlung Defekte im SiO₂-Netzwerk erzeugt werden. Die Defekte führen zu einer Veränderung der optischen Eigenschaften, insbesondere zu einer Abnahme der optischen Transmission.

Außerdem kann die Innenmarkierung durch die Erzeugung von micro-dots erfolgen, welche auf der lokalen Änderung des komplexen Brechungsindex (=optische Dichte) basiert. Die Dichteänderung wird durch lokales Aufschmelzen des Materials erzeugt, also einen thermischen Prozess.

Des Weiteren offenbart die DE 10 2014 002 644 A1 das Erzeugen einer Vogelschutzstruktur auf einer Glastafeloberfläche mittels Lasertransferdruck.

Aufgabe der vorliegenden Erfindung ist die Bereitstellung einer mobilen Laservorrichtung für die Bearbeitung von eingebauten Glastafeln, die flexibel für unterschiedliche Bearbeitungsverfahren verwendbar ist und eine hohe Bearbeitungsqualität gewährleistet.

Weitere Aufgabe ist die Bereitstellung einer Verwendung der Laservorrichtung, die ebenfalls eine hohe Bearbeitungsqualität gewährleisten.

Diese Aufgabe wird durch eine Laservorrichtung mit den Merkmalen von Anspruch 1 sowie eine Verwendung mit den Merkmalen von Anspruch 12 gelöst.

Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Eine perspektivische Ansicht der erfindungsgemäßen Laservorrichtung ohne eine Laserschutzeinrichtung
- Figur 2:: Eine rückseitige Ansicht der erfindungsgemäßen Laservorrichtung ohne Laserschutzeinrichtung
- Figur 3:: Eine Seitenansicht der erfindungsgemäßen Laservorrichtung ohne Laserschutzeinrichtung
- Figur 4:: Eine weitere Seitenansicht der erfindungsgemäßen Laservorrichtung ohne Laserschutzeinrichtung mit gekipptem Laserportal
- Figur 5:: Eine perspektivische Ansicht der erfindungsgemäßen Laservorrichtung in zerlegter Form ohne eine Laserschutzeinrichtung
- Figur 6:: Eine Seitenansicht der erfindungsgemäßen Laservorrichtung in zerlegter Form ohne Laserschutzeinrichtung
- Figur 7:: Eine perspektivische Ansicht des Laserportals der erfindungsgemäßen Laservorrichtung
- Figur 8:: Eine weitere perspektivische Ansicht des Laserportals der erfindungsgemäßen Laservorrichtung
- Figur 9:: Eine perspektivische Ansicht der erfindungsgemäßen Laservorrichtung befestigt an einem Zug
- Figur 10:: Eine weitere perspektivische Ansicht der erfindungsgemäßen Laservorrichtung befestigt an einem Zug
- Figur 11:: Stark vereinfacht und schematisch einen Laserkopf der erfindungsgemäßen Laservorrichtung bei der Laserablation
- Figur 12:: Stark vereinfacht und schematisch einen Laserkopf der erfindungsgemäßen Laservorrichtung bei der Lasermodifikation
- Figur 13:: Stark vereinfacht und schematisch einen Laserkopf der erfindungsgemäßen Laservorrichtung beim Lasern einer Kunststoffzwischenschicht
- Figur 14:: Stark vereinfacht und schematisch einen Laserkopf der erfindungsgemäßen Laservorrichtung beim Lasertransferdruck

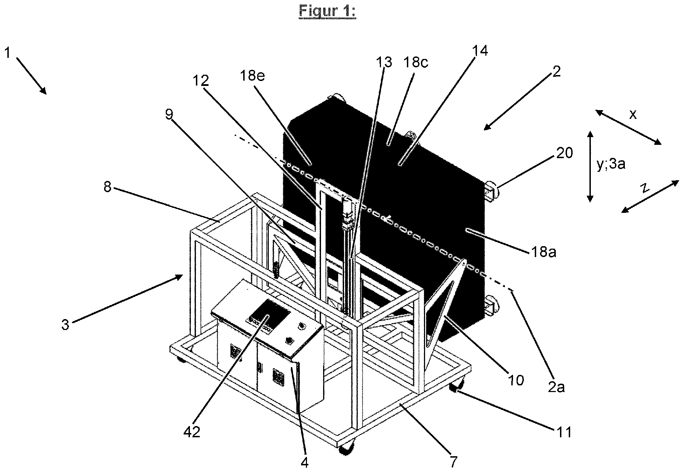

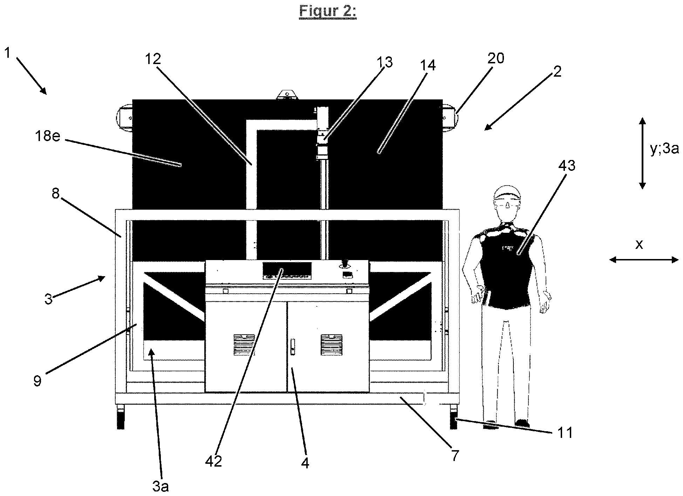

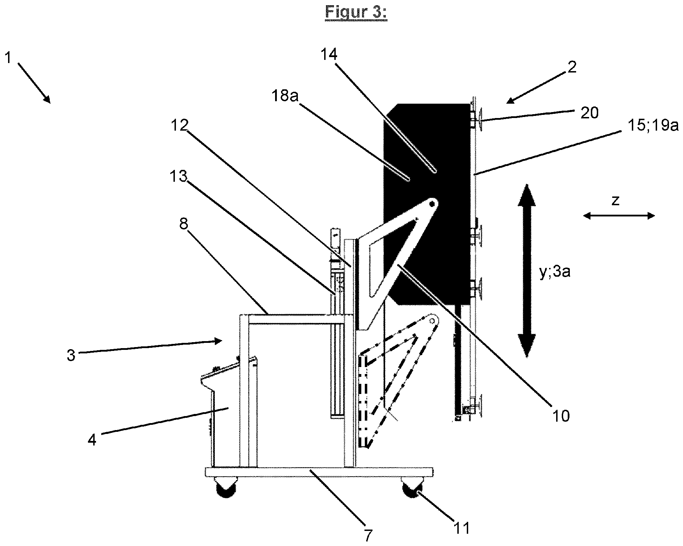

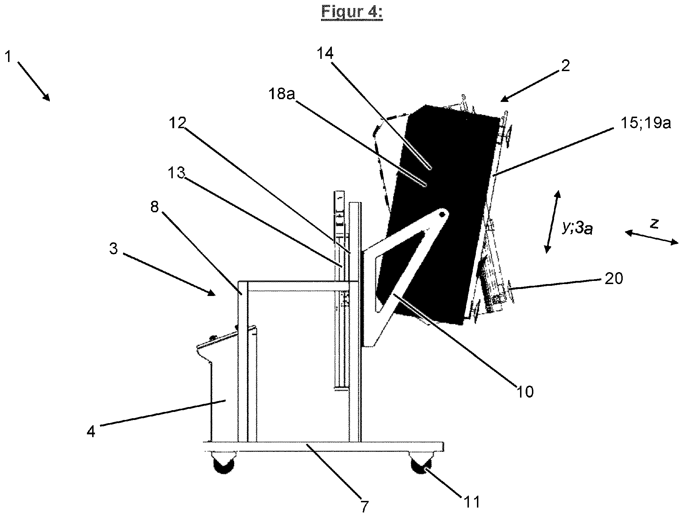

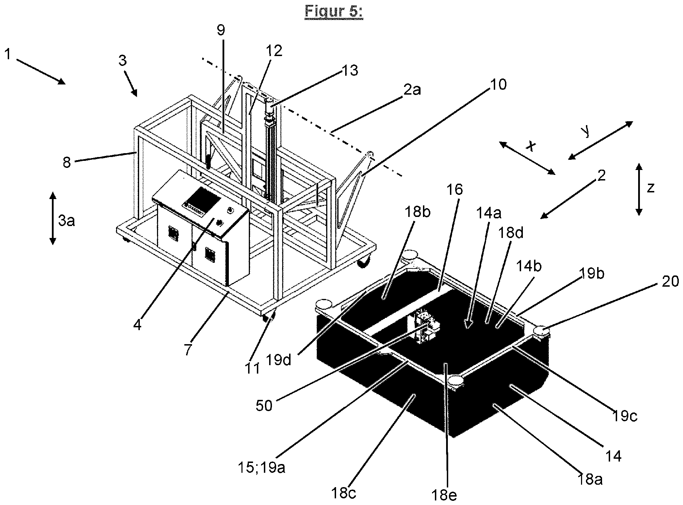

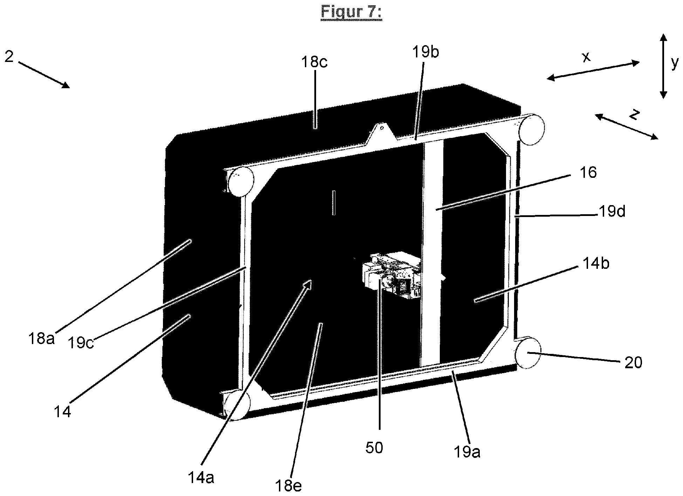

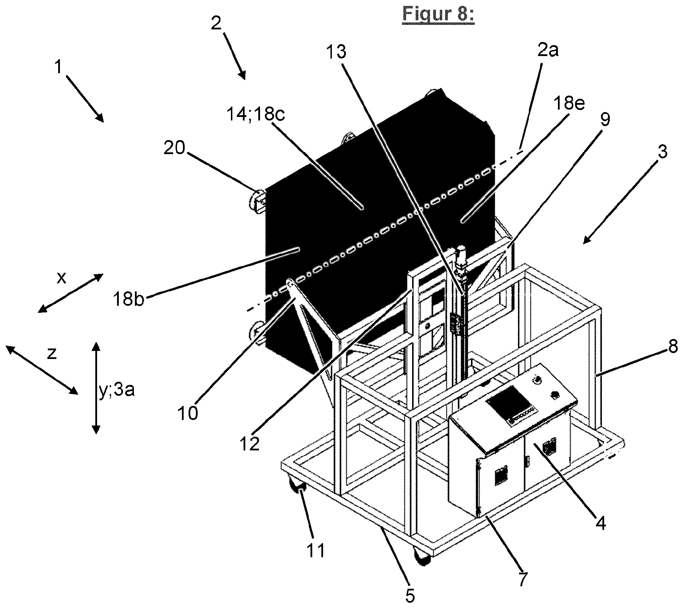

Die erfindungsgemäße mobile Laservorrichtung 1 (Fig. 1-10) weist ein Laserportal 2, vorzugsweise ein Transport- und Positioniergestell 3, eine Steuereinrichtung 4 sowie vorzugsweise eine Laserschutzeinrichtung 5 auf.

Mobil meint, dass die Laservorrichtung 1 nicht ortsfest bzw. nicht stationär ist. Sie kann deshalb an unterschiedlichen Einsatzorten verwendet werden.

Das Transport- und Positioniergestell 3 dient zum Aufstellen und vorzugsweise Verfahren der mobilen Laservorrichtung 1 auf dem Untergrund. Infolgedessen dient das Transport- und Positioniergestell 3 auch zum Positionieren der Laservorrichtung 1 und insbesondere des daran befestigten Laserportals 2 relativ zu einer zu bearbeitenden Glastafel 6.

Das Transport- und Positioniergestell 3 weist vorzugsweise einen, insbesondere quadratischen, Grundrahmen 7, einen, insbesondere quaderförmigen, Lagerrahmen 8, sowie einen, insbesondere quadratischen, Portalbefestigungsrahmen 9 sowie zwei Portalbefestigungsarme 10 auf.

Der Grundrahmen 7 dient zur Lagerung der Laservorrichtung 1 auf dem Untergrund. Vorzugsweise weist er unterseitig zudem Transportrollen 11 auf, so dass die Laservorrichtung 1 auf dem Untergrund verfahrbar ist.

Der Lagerrahmen 8 dient zur Lagerung des Laserportals 2 und weist hierzu ein Führungselement 12 auf. An dem Führungselement 12 ist der Portalbefestigungsrahmen 9 in eine, insbesondere vertikale, Gestellhöhenrichtung 3a hin- und her verfahrbar gelagert. Der Grundrahmen 7 weist zudem vorzugsweise Antriebsmittel 13, beispielsweise einen Antriebsmotor und einen Zahnradantrieb, auf, mit denen der Portalbefestigungsrahmen 9 in die Gestellhöhenrichtung 3a hin- und her antreibbar in Verbindung steht.

Somit ist das Laserportal 2 in die, insbesondere vertikale, Gestellhöhenrichtung 3a, hin- und her verfahrbar an dem Lagerrahmen 8 gelagert.

Die Positionierung des Laserportals 2 in Gestellhöhenrichtung 3a kann aber auch manuell erfolgen, z.B. durch einen Flaschenzugmechanismus.

Die Portalbefestigungsarme 10 sind einendig an dem Portalbefestigungsrahmen 9 befestigt. Andernendig ist jeweils das Laserportal 2 befestigt. Vorzugsweise ist das Laserportal 2 um eine, bevorzugt horizontale, Laserportaldrehachse 2a drehbar an den Portalbefestigungsarmen 10 gelagert. Das Laserportal 2 kann dabei frei oder, z.B. elektromotorisch, angetrieben drehbar sein. Insbesondere falls es frei drehbar ist, sind vorzugsweise Arretierungsmittel zum Arretieren des Laserportals 2 in der gewünschten Position vorhanden.

Das Laserportal 2 weist eine Laserschutzhaube 14, einen, insbesondere quadratischen, Portalgrundrahmen 15, eine daran befestigte Führungsschiene 16 und eine an der Führungsschiene gelagerte Lasereinheit 50 mit einem Laserkopf 17 und einer Abstandsmesseinrichtung 49 zur Vermessung der zu bearbeitenden Glastafel 6 in z-Richtung auf.

Das Laserportal 2 weist zudem eine x-Richtung, eine y-Richtung und eine z-Richtung auf.

Die Laserportaldrehachse 2a ist vorzugsweise parallel zur x-Richtung.

Die Laserschutzhaube 14 weist vorzugsweise zwei sich in x-Richtung gegenüberliegende Haubenseitenwandungen 18a;b, eine untere Haubenumfangswandung 18c und eine obere Haubenumfangswandung 18d sowie eine Haubenbodenwandung 18e auf.

Die Laserschutzhaube 14 weist einen Haubeninnnraum 14a und eine HaubenÖffnung 14b auf. Die Haubenseitenwandungen 18a;b, die untere Haubenumfangswandung 18c und die obere Haubenumfangswandung 18d sowie die Haubenbodenwandung 18e umgeben den Haubeninnraum 14a.

Die Laserschutzhaube 14 dient zum Schutz der Umgebung vor Laserstrahlung.

Des Weiteren besteht die Laserschutzhaube 14 aus einem laserfesten Material, vorzugsweise aus Stahlblech.

Der Portalgrundrahmen 15 weist zwei zueinander parallele und voneinander beabstandete, sich in x-Richtung erstreckende Führungsbalken 19a;b sowie zwei ebenfalls zueinander parallele und zu den Führungsbalken 19a;b senkrechte Querbalken 19c;d auf. Die Querbalken 19c;d erstecken sich somit in y-Richtung. Zudem weist der Portalgrundrahmen 15 eine der Laserschutzhaube 14 zugewandte Rahmeninnenseite und eine dieser abgewandte Rahmenaußenseite auf.

Die Laserschutzhaube 14 ist zudem am Portalgrundrahmen 15 befestigt und erstreckt sich von diesem, insbesondere von der Rahmeninnenseite, weg. Der Portalgrundrahmen 15 ist somit an einem offenen Ende der Laserschutzhaube 14 angeordnet. Er umgibt eine Haubenöffnung 14b der Laserschutzhaube 14.

Zudem weist der Portalgrundrahmen 15 Befestigungsmittel zur Befestigung der Laservorrichtung 1 an dem zu bearbeitenden Objekt bzw. Bauteil auf. Die Befestigungsmittel dienen zur festen, also unverschieblichen und unverdrehbaren, aber lösbaren Befestigung an dem zu bearbeitenden Objekt bzw. Bauteil. Vorzugsweise weist der Portalgrundrahmen 15 mehrere, bevorzugt vier, Saugnäpfe 20, bevorzugt Vakuumsaugnäpfe, auf. Die Saugnäpfe 20 sind vorzugsweise an der Rahmenaußenseite befestigt und erstrecken sich von dieser weg. Zudem ist vorzugsweise jeweils ein Saugnapf 20 in einem Eckbereich des Portalgrundrahmens 15 angeordnet.

Die sich in y-Richtung erstreckende Führungsschiene 16 weist eine der Laserschutzhaube 14 zugewandte Schieneninnenseite 16a und eine dieser abgewandte Schienenaußenseite 16b auf. Zudem ist die Führungsschiene 16 in x-Richtung hin- und her verschieblich an den beiden Führungsbalken 19a;b gelagert. Die Führungsschiene 16 erstreckt sich somit von dem einen Führungsbalken 19a zu dem gegenüberliegenden Führungsbalken 19b. Des Weiteren weist das Laserportal 2 Antriebsmittel zum Antrieb der Führungsschiene 16 in x-Richtung auf. Die Führungsschiene 16 steht also mit den Antriebsmitteln in x-Richtung hin- und her antreibbar in Verbindung. Vorzugsweise handelt es sich bei den Antriebsmitteln um einen, bevorzugt elektromotorischen, Linearantrieb.

Die Lasereinheit 50 ist in y-Richtung hin und her verfahrbar an der Führungsschiene 16 gelagert. Sie ist zudem benachbart zur Schieneninnenseite 16a angeordnet. Somit ist die Lasereinheit 50 im Haubeninnenraum 14a der Laserschutzhaube 14 angeordnet. Des Weiteren weist das Laserportal 2 Antriebsmittel zum Antrieb der Lasereinheit 50 in y-Richtung auf. Die Lasereinheit 50 steht also mit den Antriebsmitteln in y-Richtung relativ zur Führungsschiene 16 hin- und her antreibbar in Verbindung. Vorzugsweise handelt es sich bei den Antriebsmitteln um einen, bevorzugt elektromotorischen, Linearantrieb, bevorzugt einen Riemenachsantrieb.

Zudem ist die Lasereinheit 50 vorzugsweise auch in z-Richtung hin und her verfahrbar an der Führungsschiene 16 gelagert. Dazu weist das Laserportal 2 Antriebsmittel zum Antrieb der Lasereinheit 50 in z-Richtung auf. Die Lasereinheit 50 steht also mit den Antriebsmitteln in z-Richtung relativ zur Führungsschiene 16 hin- und her antreibbar in Verbindung. Vorzugsweise handelt es sich bei den Antriebsmitteln um einen, bevorzugt elektromotorischen, Linearantrieb, insbesondere mit Spindelachse.

Die erfindungsgemäße Laservorrichtung 1 ist zudem dazu eingerichtet, alternativ unterschiedliche Verfahren durchzuführen. Zumindest ist die Laservorrichtung 1 dazu eingerichtet mindestens eines, vorzugsweise mindestens zwei, der folgenden Verfahren durchzuführen:
a) Laserablation einer oberflächlichen Glasscheibenbeschichtung 23 einer Glasscheibe 22 von Glastafeln 6
b) Lasermodifikation einer oberflächlichen Glasscheibenbeschichtung 23 einer Glasscheibe 22 von Glastafeln 6
c) Lasertransferdruck
d) Laserbehandlung einer Kunststoffzwischenschicht 24 einer Verbundglastafel 25
e) Lasergravur einer Glasscheibenoberfläche 22a;b
f) Erzeugen einer Innenmodifikation in Glastafeln 6
g) Erzeugen einer Innengravur in Glastafeln 6
h) Löschen der Innenmodifikation
i) Löschen der Lasergravur der Glasscheibenoberfläche 22a;b.

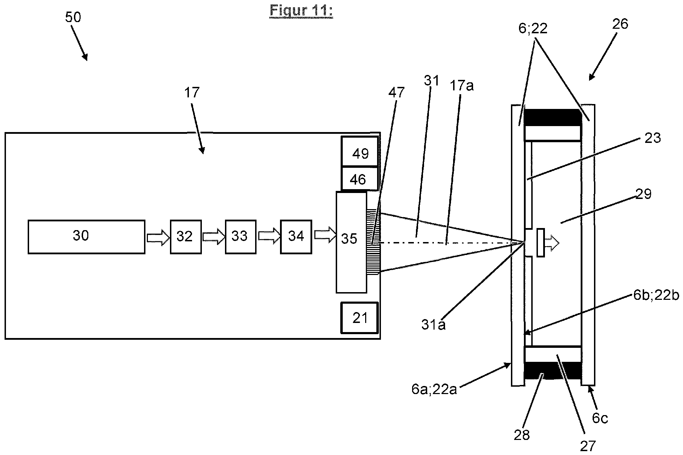

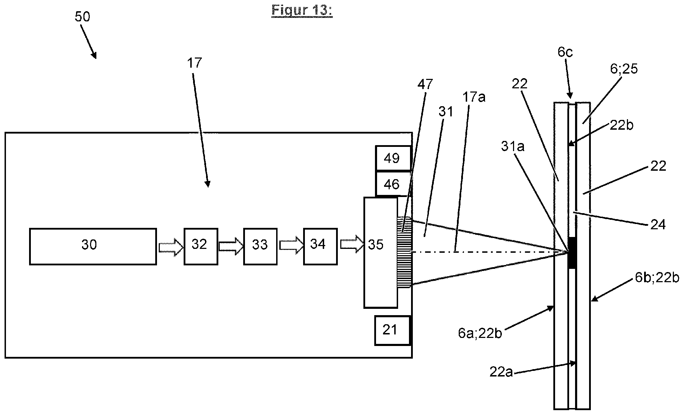

Eine zu bearbeitende Glastafel 6 (Fig. 11-14) kann aus einer einzigen Glasscheibe bzw. Glasplatte 22 bestehen (Einscheibenglas). Oder es kann sich um eine Verbundglastafel 25 handeln. Unter einer Verbundglastafel 25 versteht man eine aus zwei oder mehr Glasscheiben bzw. Glasplatten 22 mit gleicher oder unterschiedlicher Dicke ausgebildete Glastafel 6, wobei die Glasscheiben 22 durch eine Zwischenschicht aus Kunststoff bzw. einer Kunststofffolie 24 miteinander verbunden sind (Fig. 13). Die Glastafel 6 weist also eine oder mehrere Glasscheiben 22 auf.

Die Glastafel 6 weist zudem zwei sich gegenüberliegende, außenliegende Glastafeloberflächen 6a;b auf. Die Glastafeloberflächen 6a;b sind parallel zur Glastafelebene und bei der Bearbeitung vorzugsweise senkrecht zur z-Richtung. Des Weiteren weist die Glastafel 3 eine umlaufende Glastafelkante 6c auf, die insbesondere die beiden Glastafeloberflächen 6a;b miteinander verbindet.

Eine Glasscheibe 22 weist ebenfalls jeweils zwei sich gegenüberliegende Glasscheibenoberflächen 22a;b auf. Die Glasscheibenoberflächen 22a;b sind ebenfalls parallel zur Glastafelebene und bei der Bearbeitung vorzugsweise senkrecht zur z-Richtung.

Ist die Glastafel 6 als Einscheibenglastafel ausgebildet, bilden die beiden Glasscheibenoberflächen 22a;b der einzigen Glasscheibe 22 gleichzeitig auch die Glastafeloberflächen 6a;b der Glastafel 6 (Figuren 11, 12, 14).

Ist die Glastafel 6 als Verbundglastafel 25 ausgebildet (Fig. 13), bilden die außenliegenden Glasscheibenoberflächen 22a;b die Glastafeloberflächen 6a;b der Glastafel 6 und die anderen Glasscheibenoberflächen 22a;b sind innenliegend. Die Verbundglastafel 25 weist also mehr als zwei, insbesondere vier, Glasscheibenoberflächen 22a;b auf.

Die Glastafel 6 ist vorzugsweise ebenflächig ausgebildet. Sie kann aber auch gekrümmt bzw. gewölbt sein. Z.B. kann sie zylindermantelförmig ausgebildet sein. Es handelt sich bei der Glastafel 6 somit um ein flächiges Glaselement.

Des Weiteren kann die Glastafel 6 an zumindest einer ihrer Glasscheibenoberflächen 22a;b eine oberflächliche Glasscheibenbeschichtung 23, vorzugsweise eine Funktionsbeschichtung, aufweisen. Funktionsbeschichtungen verleihen Glastafeln 6 bekanntermaßen bestimmte Funktionen, z.B. Filter-, Spiegel-, Heizfunktionen.

Die Glasscheibenbeschichtung 23, insbesondere die Funktionsbeschichtung, kann in an sich bekannter Weise eine oder mehrere einzelne (Funktions)schichten aufweisen. Bei mehreren (Funktions)schichten handelt es sich somit um ein (Funktions)schichtenlaminat. Die Funktionsschichten ändern bestimmte Eigenschaften der Glastafel 6 bzw. verleihen dieser bestimmte Funktionen. Die Funktionen können dabei z.B. Wärmeschutz, Sonnenschutz, oder Beheizung sein. Bevorzugt handelt es sich bei der Funktionsbeschichtung um eine wellenlängenselektive Beschichtung bzw. Low-E-Beschichtung.

Die Glasscheibenbeschichtung 23, insbesondere die Funktionsbeschichtung, der Glastafel 6 weist vorzugsweise zumindest eine, vorzugsweise mehrere, elektrisch leitfähige, metallhaltige (Funktions)schichten auf. Zudem kann die Beschichtung 23, insbesondere die Funktionsbeschichtung, zumindest eine elektrisch halbleitende (Funktions)schicht aufweisen.

Vorzugsweise weist die Glasscheibenbeschichtung 23 mindestens eine metallische und/oder mindestens eine keramische Schicht, bevorzugt eine Metalloxidschicht, auf.

Vorzugsweise weist die Glasscheibenbeschichtung 23, insbesondere die Funktionsbeschichtung, eine metallhaltige, bevorzugt eine metallische (Funktions)schicht, bevorzugt aus Silber, Kupfer oder Gold, auf. Eine (Funktions)schicht aus Metalloxid besteht vorzugsweise aus Zinnoxid. Selbstverständlich muss die keramische (Funktions)schicht nicht aus Oxidkeramik bestehen. Es kann sich z.B. auch um eine nichtoxidische keramische (Funktions)schicht handeln.

Auch kann die Glasscheibenbeschichtung 23, insbesondere die Funktionsbeschichtung, zumindest eine elektrisch isolierende (Funktions)schicht aufweisen.

Die Glasscheibenbeschichtung 23, insbesondere die Funktionsbeschichtung, der Glastafel 6 weist somit vorzugsweise zumindest eine elektrisch leitende, metallische und/oder zumindest eine elektrisch leitende, bevorzugt metallhaltige, keramische (Funktions)schicht auf.

Das Aufbringen der (Funktions)schichten auf die Glastafel 6 kann durch Sputtern oder nasschemisch erfolgen.

Gemäß einer weiteren bevorzugten Ausführungsform handelt es sich bei der Glasscheibenbeschichtung 23, vorzugsweise der Funktionsbeschichtung, um eine, bevorzugt einschichtige, pyrolytische Beschichtung. Diese besteht aus einem Metalloxid, bevorzugt aus Zinnoxid.

Die Herstellung einer derartigen Glasscheibenbeschichtung 23 ist bekannt. Das Beschichtungsmaterial liegt in dampfförmiger, flüssiger oder fester Form vor. Die Schichtbildung erfolgt während des Herstellungsprozesses der Glastafel 6 durch eine Reaktion des metalloxidischen Beschichtungsmaterials auf der heißen Glastafeloberfläche 6a (Hard-Coating-Verfahren). Glastafeln 6 mit einer derartigen Funktionsbeschichtung lassen kurzwellige Strahlung hindurch und reflektieren die langwellige Infrarotstrahlung.

Des Weiteren weist die Glasscheibenbeschichtung 23, vorzugsweise die Funktionsbeschichtung, vorzugsweise eine Dicke von < 2 µm, bevorzugt < 1 µm, auf.

Die zu bearbeitende Glastafel 6 kann zudem eine an sich bekannte außenliegende oberflächliche Schutzbeschichtung aus Kunststoff aufweisen, insbesondere in Form einer nicht abziehbaren Polymerbeschichtung oder einer abziehbaren Kunststofffolie. Die Schutzbeschichtung deckt die jeweilige Glastafeloberfläche 6a;b oder, falls vorhanden, die Glasscheibenbeschichtung 23 ab.

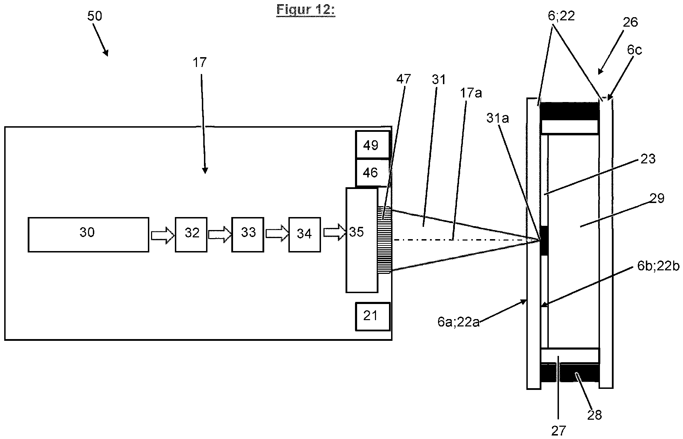

Zudem kann die zu bearbeitende Glastafel 6 Teil einer Isolierverglasung 26 (Fig. 11, 12) sein. Die Isolierverglasung 26 weist in an sich bekannter Weise mindestens zwei zueinander parallele und voneinander beabstandet angeordnete Glastafeln 6 und einen zwischen den Glastafeln 6 angeordneten Abstandhalterrahmen 27, der die beiden Glastafeln 6 im Glastafelrandbereich miteinander verbindet, eine Primärdichtung (nicht dargestellt) sowie eine Randabdichtung (Sekundärdichtung) 28 auf. Von den Glastafeln 6 und dem Abstandhalterrahmen 27 wird ein Scheibeninnenraum 29 begrenzt. Die Primärdichtung ist in an sich bekannter Weise zwischen dem Abstandhalterrahmen 27 und der jeweiligen Glastafel 6 vorhanden und verklebt diese miteinander.

Bei den Glastafeln 6 der Isolierverglasung 26 kann es sich jeweils um eine Einscheibenglastafel 22 oder eine Verbundglastafel 25 handeln.

Der erfindungsgemäße Laserkopf 17 (Fig. 11-14) weist eine Laserstrahlungsquelle 30 zur Bereitstellung bzw. Erzeugung eines Laserstrahls 31, vorzugsweise eine Strahlformungseinrichtung 32 zur geometrischen Strahlformung, vorzugsweise eine Energieverteilungseinrichtung 33 zur Anpassung der Energieverteilung des Laserstrahls 31, erfindungsgemäß eine optische z-Fokusverstellungseinrichtung 34 und vorzugsweise eine Scaneinrichtung 35 auf.

Die Laserstrahlungsquelle 30 ist vorzugsweise auswechselbar, so dass für jeden Anwendungsfall die optimale Laserstrahlungsquelle 30 verwendet werden kann. Vorzugsweise wird eine bezüglich der Wellenlänge und/oder Laserleistung und/oder Pulsdauer für den jeweiligen Anwendungsfall geeignete Laserstrahlungsquelle 30 verwendet.

Vorzugsweise handelt es sich bei der Laserstrahlungsquelle 30 je nach dem durchzuführenden Verfahren um einen UV-Laser oder einen IR-Laser oder einen VIS-Laser.

Des Weiteren kann es sich um einen Dauerstrichlaser oder einen gepulsten Laser handeln. Vorzugsweise handelt es sich um einen gepulsten Laser, bei dem die Pulsdauer und/oder die Repetitionsrate in bestimmten Grenzen einstellbar ist.

Vorzugsweise handelt es sich bei der Laserstrahlungsquelle 30 zudem um einen Faserlaser.

Vorzugsweise handelt es sich bei der Laserstrahlungsquelle 30 zudem um einen Laser, bei dem die Laserleistung anpassbar ist. Vorzugsweise ist die Laserleistung im Bereich von 5 bis 1000 W, bevorzugt 5 bis 200 Watt, besonders bevorzugt 20 bis 200 W einstellbar.

Im Rahmen eines bevorzugten Ausführungsbeispiels wird für die Lasermodifikation, die Laserablation und den Lasertransferdruck ein gepulster ns-Faserlaser mit einer Laserleistung von 100 W und einer Wellenlänge von 1 µm verwendet.

Wie bereits erläutert, weist der Laserkopf 17 zudem die Strahlformungseinrichtung 32 auf. Die Strahlformungseinrichtung 32 ist der Laserstrahlungsquelle 30 nachgeordnet und dient zur geometrischen Strahlformung des Laserstrahls 31. Nachgeordnet im Sinne der Anmeldung ist in Richtung des Laserstrahls 31 zu verstehen.

Beispielsweise dient die Strahlformungseinrichtung 32 zur Formung des Laserstrahls 31 derart, dass er einen rechteckigen Querschnitt oder einen linienförmigen Querschnitt oder einen kreisförmigen Querschnitt aufweist. Hierzu weist die Strahlformungseinrichtung 32 in an sich bekannter Weise ein z.B. Linsensystem, vorzugsweise eine GRIN-Optik (Gradienten-Index-Linsen-Optik) auf.

Des Weiteren ist die Strahlformungseinrichtung 32 vorzugsweise in den Strahlengang des Laserstrahls 31 bringbar und aus diesem entfernbar. Bevorzugt kann die Strahlformungseinrichtung 32 in den Strahlengang eingeschwenkt werden und wieder ausgeschwenkt werden. Die Strahlformungseinrichtung 32 ist hierzu entsprechend im Laserkopf 17 gelagert. Vorzugsweise weist der Laserkopf 17 zudem entsprechende Antriebsmittel auf, mit denen die Strahlformungseinrichtung 32 in den Strahlengang bringbar und aus diesem entfernbar antreibbar in Verbindung steht.

Dadurch kann die Strahlformungseinrichtung 32 je nach durchzuführendem Verfahren und benötigtem Querschnittsprofil des Laserstrahls 31 im oder außerhalb des Strahlengangs des Laserstrahls 31 angeordnet bzw. positioniert werden.

Die Strahlformungseinrichtung 32 ist zudem vorzugsweise auswechselbar, so dass die zu erzeugende Strahlgeometrie variiert werden kann.

Zudem können auch mehrere Strahlformungseinrichtungen 32 vorhanden sein, die wahlweise in den Strahlengang bringbar und aus diesem entfernbar sind. Dies kann vorzugsweise mittels eines, insbesondere elektromotorisch, angetriebenen Revolvers erfolgen.

Wie bereits erläutert, weist der Laserkopf 17 zudem die Energieverteilungseinrichtung bzw. Strahlprofilformungseinrichtung 33 auf. Die Energieverteilungseinrichtung 33 ist vorzugsweise der geometrischen Strahlformungseinrichtung 32 nachgeordnet und dient zur Anpassung der Energieverteilung bzw. zur Formung des Strahlprofils des Laserstrahls 31. Die Energieverteilungseinrichtung 33 weist vorzugsweise Mittel zur Erzeugung eines ringförmigen Strahlprofils (M-Profil) oder eines Top-Hat-Profils in der Regel aus einem Gaußschen Strahlprofil auf.

Analog zur Strahlformungseinrichtung 32 kann zudem auch die Energieverteilungseinrichtung 33 je nach durchzuführendem Verfahren und benötigtem Querschnittsprofil des Laserstrahls 31 im oder außerhalb des Strahlengangs des Laserstrahls 31 angeordnet bzw. positioniert werden, wozu entsprechende Stellmittel vorhanden sind.

Die Energieverteilungseinrichtung 33 ist zudem vorzugsweise auswechselbar, so dass die zu erzeugende Energieverteilung variiert werden kann.

Zudem können auch mehrere Energieverteilungseinrichtungen 33 vorhanden sein, die wahlweise in den Strahlengang bringbar und aus diesem entfernbar sind. Dies kann vorzugsweise mittels eines, insbesondere elektromotorisch, angetriebenen Revolvers erfolgen.

Die Energieverteilungseinrichtung 33 und die Strahlformungseinrichtung 32 können zudem auch in einer Einrichtung kombiniert sein.

Wie bereits erläutert, weist der Laserkopf 17 zudem erfindungsgemäß die optische z-Fokusverstellungseinrichtung 34 auf. Die optische z-Fokusverstellungseinrichtung 34 ist vorzugsweise der Energieverteilungseinrichtung 33 nachgeordnet und dient zur automatisierten optischen Einstellung des Laserfokus 31a entlang einer optischen z-Achse 17a des Laserkopfes 17 bzw. zur optischen Verschiebung der Fokuslage des Laserfokus 31a entlang der optischen z-Achse 17a. Hierzu weist die z-Fokusverstellungseinrichtung 34 eine Optik, vorzugsweise ein Linsensystem, auf.

Die Verschiebung des Laserfokus 31a erfolgt zudem auf Basis der Messergebnisse der Abstandsmesseinrichtung 49. Die Abstandsmesseinrichtung 49 dient zur Vermessung der zu bearbeitenden Glastafel 6 in z-Richtung. Hierzu weist die Abstandsmesseinrichtung 49 vorzugsweise eine Messeinrichtungslaserstrahlungsquelle zur Erzeugung eines Messlaserstrahls und einen Laserstrahldetektor, vorzugsweise einen Zeilensensor, zur Detektion von Laserstrahlreflexen des Messlaserstrahls auf.

Mittels der Abstandsmesseinrichtung 49 wird die zu bearbeitende Glastafel 6 oder zumindest der zu bearbeitende Bereich der Glastafel 6 mittels des Messlaserstrahls bestrahlt, wobei der Messlaserstrahl mit der Flächennormalen auf die Glastafeloberflächen 6a;b einen Winkel einschließt. Der Messlaserstrahl wird von den Glastafeloberflächen 6a;b bzw. den Glasscheibenoberflächen 22a;b reflektiert und die reflektierten Laserstrahlreflexe werden von dem Laserstrahldetektor erfasst.

Vorzugsweise ist der Messlaserstrahl zudem linienförmig, wozu die Abstandsmesseinrichtung 49 an sich bekannte Mittel zur Formung des Messlaserstrahls aufweist.

Dieses Messprinzip ist insbesondere aus der DE 10 2006 049 946 A1 bekannt, auf deren Inhalt hiermit Bezug genommen wird.

Bei diesem Messprinzip wird an jeder Glasscheibenoberfläche 22a;b ein Laserstrahlreflex erzeugt, so dass für jede einzelne Glasscheibe 22 zwei Reflektionen des einfallenden Laserstrahls erfolgen, nämlich zum einen an der in Einfallsrichtung vorderen Glasscheibenoberfläche 22a und nach Durchgang durch die Glasscheibe 22 auch an der hinteren Glasscheibenoberfläche 22b. Es werden daher in dem Laserstrahldetektor nach dem Auftreffen der Laserstrahlreflexe für jede einzelne Glasscheibe 22 zwei Laserstrahlreflexe detektiert.

Aus der Anzahl und Art der Reflexe wird dann die Lage der jeweiligen reflektierenden Glasscheibenoberflächen 22a;b; bestimmt und dadurch die Glastafel 6 oder auch die gesamte Isolierverglasung in z-Richtung vermessen. Insbesondere werden die Abstände der Glasscheibenoberflächen 22a;b voneinander bestimmt und deren exakte Position in z-Richtung gesehen. Dies ist wichtig für die exakte Positionierung des Laserfokus 31a in z-Richtung.

Denn es ist von Bedeutung, den Laserstrahl 31 je nach durchzuführendem Verfahren auf die richtige Ebene zu fokussieren. Beispielsweise muss der Laserstrahl 31 auf die innere oder äußere Glastafeloberfläche 6a;b, die Glasscheibenbeschichtung 23 oder die Kunststoffzwischenschicht 24 fokussiert werden, worauf weiter unten näher eingegangen wird. Zudem muss gegebenenfalls während der Bearbeitung der Glastafel 6 aufgrund von Unebenheiten der Glastafeloberfläche 6a der Fokus entsprechend parallel zur sich in z-Richtung erstreckenden optischen z-Achse 17 verstellt werden.

Auch kann aus der Anzahl der Reflexe die Anzahl der hintereinander angeordneten Glasscheiben 22 bestimmt werden, falls diese nicht bekannt ist.

Die Abstandmesseinrichtung 49 steht dabei mit der Steuereinrichtung 4 in Verbindung, die die Messdaten verarbeitet.

Wie bereits erläutert, weist der Laserkopf 17 zudem die Scaneinrichtung 35 auf. Die Scaneinrichtung 35 ist vorzugsweise der optischen z-Fokusverstellungseinrichtung 34 nachgeordnet und dient zum Bewegen des Laserstrahls 31 in einem Scanfeld. Mittels der Scaneinrichtung 35 kann der Laserstrahl 31 in y-Richtung und in x-Richtung bewegt werden. Hierzu weist die Scaneinrichtung 35 in an sich bekannter Weise eine Scanoptik auf. Vorzugsweise handelt es sich bei der Scanoptik um zumindest zwei verstellbare Spiegel. Das Scanfeld beträgt z.B. 100 mm x 100 mm.

In an sich bekannter Weise kann der Laserstrahls 31 dabei derart in y-Richtung und in x-Richtung bewegt werden, dass er parallel zur optischen z-Achse 17a bleibt oder in Relation zu dieser ausgelenkt wird.

Zudem weist die Scaneinrichtung 35 ein Objektiv 47 auf. Dabei ist das Objektiv 47 vorzugsweise kurzbrennweitig. Es weist vorzugsweise eine Brennweite von 20 bis 200 mm, bevorzugt von 80 bis 160 mm, auf. Dadurch wird eine starke Fokussierung und eine geringe Erstreckung des Laserfokus 31a in die Tiefe bzw. in Richtung der optischen z-Achse 17a erreicht. Insbesondere ist der Laserfokus 31a im Bereich von ca. +/- 1 mm in der Tiefe konstant. Dies gewährleistet, dass z.B. in einer Verbundglastafel 25 oder einer Isolierverglasung 26 nur die zu bearbeitende Schicht 23;24 mittels der Laserenergie modifiziert bzw. abgetragen wird und die übrigen Bereiche der Glastafel 6 unverändert bleiben.

Vorzugsweise ist das Objektiv 47 zudem auswechselbar, so dass unter anderem der Arbeitsabstand variiert und angepasst werden kann. Vorzugsweise ist das Objektiv 47 rausschraubbar.

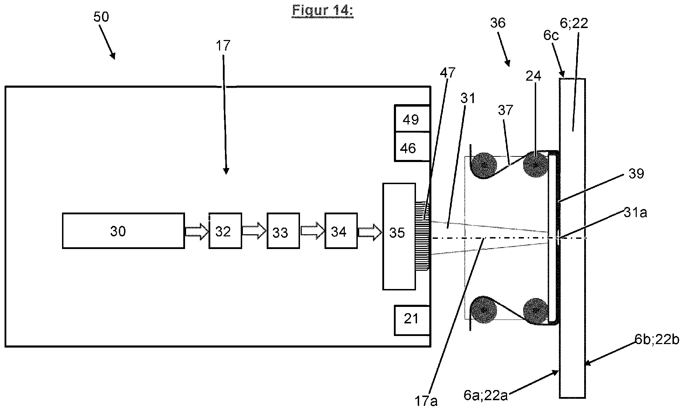

Wie bereits erläutert, wird die erfindungsgemäße Laservorrichtung 1 zudem dazu verwendet, eine Glastafeloberfläche 6a der Glastafel 6 mittels Lasertransferdruck zu beschichten (Fig. 14). Hierzu weist der Laserkopf 17 eine Lasertransferdruckeinrichtung 36 auf.

Die Lasertransferdruckeinrichtung 36 weist ein, bevorzugt bandförmiges, Spender- bzw. Trägermedium 37, insbesondere eine bandförmige Trägerfolie, mehrere Führungsrollen 38 und einen Andruckrahmen 39 auf.

Des Weiteren ist die Lasertransferdruckeinrichtung 36 vorzugsweise in den Strahlengang des Laserstrahls 31 bringbar und aus diesem entfernbar. Bevorzugt kann die Lasertransferdruckeinrichtung 36 in den Strahlengang eingeschwenkt werden und wieder ausgeschwenkt werden. Die Lasertransferdruckeinrichtung 36 ist hierzu entsprechend gelagert. Vorzugsweise weist der Laserkopf 17 zudem entsprechende Antriebsmittel auf, mit denen die Lasertransferdruckeinrichtung 36 in den Strahlengang bringbar und aus diesem entfernbar antreibbar in Verbindung steht.

Die Lasertransferdruckeinrichtung 36 kann aber auch auswechselbar sein bzw. lediglich bei Bedarf in den Laserkopf 17 eingesetzt werden.

Bei dem Spender- bzw. Trägermedium 37 handelt es sich vorzugsweise um eine beschichtete Kunststofffolie, bevorzugt aus PET. Dabei ist das Trägermedium 37 vorzugsweise bandförmig.

Des Weiteren weist das Trägermedium 37 eine oberflächliche Trägermediumbeschichtung aus Beschichtungsmaterial auf. Die Trägermediumbeschichtung weist vorzugsweise zumindest eine metallische Schicht und/oder zumindest eine keramische Schicht, bevorzugt eine Metalloxidschicht, auf.

Bevorzugt ist die Trägermediumbeschichtung einschichtig ausgebildet. Besonders bevorzugt besteht sie aus einem metallischen Material, insbesondere aus Silber, Kupfer oder Gold.

Bei der Trägermediumbeschichtung kann es sich aber auch um eine Low-E-Beschichtung handeln.

Des Weiteren weist die Trägermediumbeschichtung vorzugsweise eine Dicke von < 5 µm auf.

Des Weiteren ist das Trägermedium 37 vorzugsweise auswechselbar. Dadurch können je nach Anwendungsfall unterschiedliche Trägermedien mit unterschiedlicher Trägermediumbeschichtung verwendet werden.

Der Andruckrahmen 39 dient zum Andrücken des bandförmigen Trägermediums 37 an die zu markierende Glastafel 6. Dabei ist der Andruckrahmen 39 vorzugsweise durchlässig für die Laserstrahlung. Alternativ dazu weist der Andruckrahmen 39 eine Öffnung auf, die den zu beschichtenden Bereich der Glastafel 6 freigibt.

Das bandförmige Trägermedium 37 ist zudem um die drehbar antreibbaren Führungsrollen 38 herum geführt und wird von diesen, falls gewünscht, relativ zum Laserstrahl 31 und zum Andruckrahmen 39 bewegt. Zum Antrieb der Führungsrollen 38 um ihre Rollenachse weist der Laserkopf 17 entsprechende Antriebsmittel auf.

Die Lasereinheit 50 weist zudem eine x-y-Messeinrichtung 46, vorzugsweise eine Kamera, zur Vermessung der äußeren Abmessungen der zu bearbeitenden Glastafel 6 in x- und y-Richtung, insbesondere zur Vermessung der der Glaskante 6c in x- und y-Richtung, auf. Hierzu weist die Kamera vorzugsweise eine an sich bekannte Bilderkennungssoftware auf.

Des Weiteren weist die Lasereinheit 50 vorzugsweise eine Absaugeinrichtung 21 zum Absaugen von mittels der Laserstrahlung abgetragenem Material auf.

Alle Bauteile der Lasereinheit 50 sind dabei vorzugsweise an einer Grundplatte der Lasereinheit 50 gelagert.

Wie bereits erläutert, weist die erfindungsgemäße Laservorrichtung 1 zudem die Steuereinrichtung 4 zur Auswahl und automatisierten Steuerung der unterschiedlichen Bearbeitungsverfahren auf. Hierzu weist die Steuereinrichtung 4 jeweils ein Programm zur Steuerung des jeweiligen Bearbeitungsverfahrens auf.

Vorzugsweise ist die Steuereinrichtung 4 an dem Transport- und Positioniergestell 3 gelagert. Die Steuereinrichtung 4 weist zudem vorzugsweise ein Bedien- bzw. Eingabefeld 42 zur Bedienung durch eine Bedienperson 43 auf.

Die Laserschutzvorrichtung 5 weist ein Laserschutzelement 40, vorzugsweise einen Laserschutzvorhang 41, sowie eine Detektiereinrichtung zum Detektieren des Vorhandenseins des Laserschutzelements 40 auf. Insbesondere ist die Detektiereinrichtung dazu eingerichtet, zu detektieren, ob das Laserschutzelement 40, vorzugsweise der Laserschutzvorhang 41, auf der dem Laserkopf 17 gegenüberliegenden Seite der Glastafel 6 vorhanden und ordnungsgemäß positioniert ist. Hierzu weist die Detektiereinrichtung mehrere Sensoren, vorzugsweise magnetische Sensoren und/oder oder Funksensoren auf. Zudem steht die Detektiereinrichtung mit der Steuereinrichtung 4 in Verbindung. Vorzugsweise ist die Steuereinrichtung 4 so eingerichtet, dass die Laserstrahlungsquelle 30 nur in Gang gesetzt und/oder betrieben werden kann, wenn mittels der Detektiereinrichtung eine ordnungsgemäße Positionierung des Laserschutzelements 40, vorzugsweise des Laserschutzvorhangs 41, detektiert wird. Insbesondere ist die Steuereinrichtung 4 so eingerichtet, dass die Laserstrahlungsquelle 30 automatisch abgeschaltet wird, wenn das Laserschutzelement 40 nicht mehr ordnungsgemäß positioniert ist.

Das Laserschutzelement 40, vorzugsweise der Laserschutzvorhang 41, weist zudem Befestigungsmittel zur Befestigung an dem jeweiligen Objekt, z.B. einer Zuginnenhaut 44b, auf, worauf weiter unten näher eingegangen wird. Bei den Befestigungsmitteln handelt es sich vorzugsweise um Saugnäpfe, insbesondere Vakuumsaugnäpfe, oder magnetische Befestigungsmittel.

Die Energieversorgung der erfindungsgemäßen Laservorrichtung 1 erfolgt entweder über den Anschluss an ein ortsfestes Stromnetz oder die Laservorrichtung 1 ist autark und weist eine eigene Energieversorgungseinrichtung (nicht dargestellt) auf. Bei der eigenen Energieversorgungseinrichtung handelt es sich vorzugsweise um einen Generator oder eine Batterie. Der Generator ist vorzugsweise von dem Transport- und Positioniergestell 3 mechanisch entkoppelt, um Vibrationen des Transport- und Positioniergestells 3 beim Lasern zu vermeiden.

Die Druckluftversorgung der erfindungsgemäßen Laservorrichtung 1 erfolgt ebenfalls entweder über den Anschluss an eine ortsfeste Druckluftquelle oder die Laservorrichtung 1 ist autark und weist eine eigene Druckluftquelle (nicht dargestellt) auf. Die Druckluftquelle dient vorzugsweise zum Betrieb der Vakuumsaugnäpfe und/oder zum Andrücken des Andruckrahmens 39 beim Lasertransferdruck.

Es können mit der erfindungsgemäßen mobilen Laservorrichtung 1 wie oben beschrieben unterschiedliche Bearbeitungsverfahren durchgeführt werden. Erfindungsgemäß wird die erfindungsgemäße mobile Laservorrichtung 1 für eins der nachfolgend beschriebenen Verfahren verwendet.

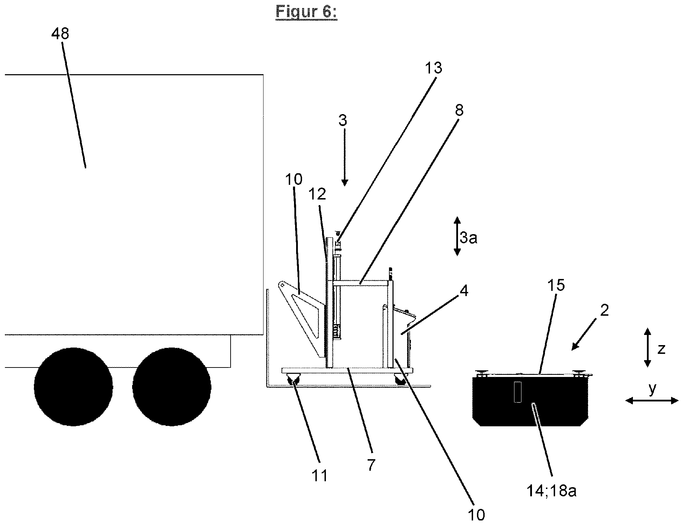

Dazu wird die erfindungsgemäße, mobile Laservorrichtung 1 zunächst zum zu bearbeitenden Objekt bzw. Einsatzort transportiert. Dies kann zum Beispiel in einem Kleintransporter 48 (Fig. 6) erfolgen. Zum Transport wird die Laservorrichtung 1 vorzugsweise zerlegt, bevorzugt in drei Teile, nämlich das Transport- und Positioniergestell 3, das Laserportal 2 und die Laserschutzeinrichtung 5. Am Einsatzort erfolgt dann der Zusammenbau der Laservorrichtung 1, insbesondere die Montage des Laserportals 2 am Transport- und Positioniergestell 3. Falls notwendig, wird die mobile Laservorrichtung 1 zudem an die externe Energieversorgungseinrichtung und/oder die externe Druckluftquelle angeschlossen.

Am Einsatzort wird dann die zusammengebaute Laservorrichtung 1 mittels des Transport- und Positioniergestells 3 zur zu bearbeitenden Glastafel 6 verfahren.

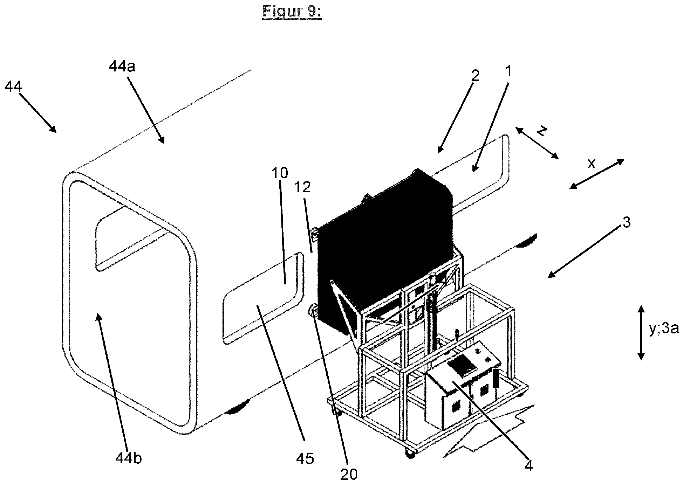

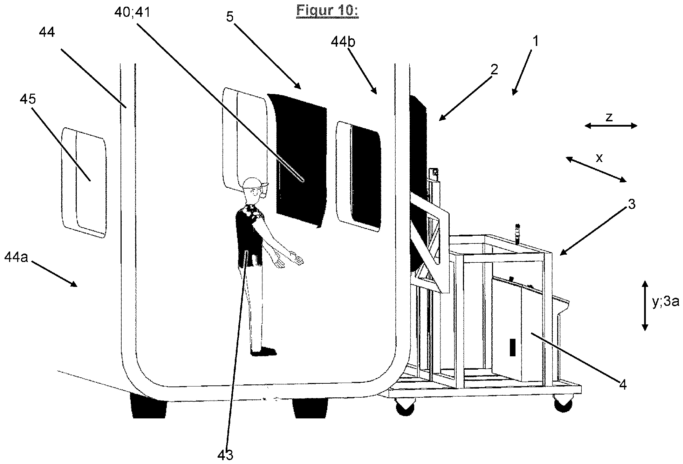

Gemäß einer Ausführungsform der Erfindung (Fig. 9, 10) handelt es sich um eine Glastafel 6 eines Zugfensters 45 eines Zuges 44.

Es kann sich aber vorzugsweise auch um eine eingebaute Glastafel 6 eines Gebäudes (=Architekturglas), insbesondere eines Bürogebäudes, bevorzugt eines Fensters, oder einer Balustrade oder eines Balkons des Gebäudes oder eine Fassadenplatte des Gebäudes handeln.

Die Laservorrichtung 1 wird, beispielsweise von der Bedienperson 43, mittels des Transport- und Positioniergestells 3 relativ zum Objekt positioniert und, falls notwendig, das Laserprotal 2 um die Laserportaldrehachse 2a verschwenkt.

Danach wird das Laserportal 2 mittels der Saugnäpfe 20 an dem die zu bearbeitende Glastafel 6 aufweisenden Objekt lösbar, aber unverschieblich und unverdrehbar befestigt. Beispielsweise wird das Laserportal 2 an einer Zugaußenhaut 44a des Zuges 44 befestigt. Es kann aber selbstverständlich auch direkt an der Glastafel 6 befestigt werden.

Das Laserportal 2 wird dabei so angeordnet, dass es das Zugfenster 45 bzw. die Glastafel 6 umgibt.

Zudem wird das Laserschutzelement 40 auf der dem Laserportal 2 gegenüberliegenden Seite der Glastafel 6 positioniert. Beispielsweise wird das Laserschutzelement 40, vorzugsweise der Laserschutzvorhang 41, derart an der Zuginnenhaut 44b befestigt, dass es das Zugfenster 45 von innen abdeckt (Fig. 10). Mittels der Detektiereinrichtung wird automatisiert das Vorhandensein und die richtige Positionierung des Laserschutzelements 40 detektiert und eine entsprechende Information an die Steuereinrichtung 4 gesendet.

Anschließend erfolgt eine Vermessung der äußeren Abmessungen der zu bearbeitenden Glastafel 6 in x- und y-Richtung. Dazu wird der Laserkopf 17 in x-und y-Richtung über die Glastafel 6 verfahren und mittels der x-y-Messeinrichtung 46, bevorzugt der Kamera, ein 2D-Bild von der Glastafel 6 erstellt. Insbesondere werden die x-und y-Koordinaten der äußeren Abmessungen der Glastafel 6 ermittelt. Diese Informationen sind insbesondere für eine genaue x-/y-Positionierung des Laserstrahls 31 in Relation zu der Glastafel 6 während des Laservorgangs wichtig.

Die x-y-Messeinrichtung 46, bevorzugt die Kamera, steht deshalb mit der Steuereinrichtung 4 in Verbindung und übermittelt an diese die Koordinaten bzw. das erstellte 2D-Bild.

Wie bereits erläutert, muss je nach dem durchzuführenden Bearbeitungsverfahren der Laserfokus 31a in z-Richtung anders positioniert werden. Beispielsweise muss der Laserstrahl 31 auf die Glasscheibenbeschichtung 23, die Kunststoffzwischenschicht 24, das Innere der Glastafel 6 oder die Glastafeloberfläche 6a;b oder eine innenliegende Glasscheibenoberfläche 22a;b fokussiert werden. Des Weiteren muss im Fall einer gewölbten oder unebenen Glastafel 6, Glastafeloberfläche 6a;b oder Glasscheibenoberfläche 22a;b der Laserfokus 31a während des Bearbeitens entsprechend nachgestellt werden.

Dazu wird die Glastafel 6 mittels der Abstandsmesseinrichtung 49 wie oben beschrieben in z-Richtung vermessen. Dies kann während der Vermessung der Glastafel 6 in x-/y-Richtung, davor oder danach erfolgen.

Alternativ dazu kann das Vermessen in z-Richtung auch online während der Bearbeitung der Glastafel 6 erfolgen, indem die Abstandsmesseinrichtung 49 in Bezug zum Laserstrahl 31 vorlaufend ist und den zu bearbeitenden Bereich vermisst direkt bevor dieser mit dem Laserstrahl 31 bearbeitet wird. Hierzu ist die Abstandsmesseinrichtung 49 in x- und y-Richtung verfahrbar und antreibbar an der Lasereinheit 50 gelagert.

Mittels der Abstandsmesseinrichtung 49 werden insbesondere auch eine oder mehrere Wölbungen bzw. Unebenheiten der Glastafel 6 und/oder der Glastafeloberfläche 6a;b bzw. Glasscheibenoberfläche 22a;b und/oder Dickenunterschiede bestimmt.

Auf Basis der Messergebnisse der x-y-Messeinrichtung 46, vorzugsweise der Kamera, und der Abstandsmesseinrichtung 49 wird, von der Steuereinrichtung 4, vorzugsweise ein 3D-Bild der zu bearbeitenden Glastafel 6 erstellt. Die x- und y-Koordinaten werden dabei auf Basis der x- und y-Koordinaten der äußeren Abmessung der Glastafel 6 und des Verfahrweges der Abstandsmesseinrichtung 49 errechnet.

Vor dem Beginn des Bearbeitungsvorgangs wird dann zunächst der Laserkopf 17 in x-,y- und z-Richtung entsprechend positioniert. Dazu wird der Laserkopf 17 entlang der Führungsschiene 16 in y-Richtung verfahren und/oder mit der Führungsschiene entlang der Führungsbalken 19a;b in x-Richtung verfahren und/oder in z-Richtung relativ zur Führungsschiene 16 zur 0-Position bzw. Startposition verfahren.

Vorzugsweise wird der Laserfokus 31a durch die Positionierung des Laserkopfes in z-Richtung zunächst auf die dem Laserkopf 17 zugewandte Glastafeloberfläche 6a fokussiert. Die weitere Fokussierung des Laserstrahls 31 erfolgt dann über die optische z-Fokusverstellungseinrichtung 34. Die Einstellung bzw. Verschiebung des Laserfokus 31a entlang der optischen z-Achse 17a erfolgt während der Bearbeitung über die optische z-Fokusverstellungseinrichtung 34. Die Einstellung bzw. das Verschieben erfolgt dabei automatisiert gesteuert auf Basis der zuvor ermittelten x-, y- und z-Koordinaten, insbesondere des 3D-Bildes, der Glastafel 6 bzw. Glastafeloberfläche(n) 6a;b bzw. Glasscheibenoberfläche(n) 22a;b.

Zur Bearbeitung wird zudem in an sich bekannter Weise der Laserkopf 17 in x-und/oder y-Richtung relativ zur Glastafel 6 verfahren und/oder der Laserstrahl 31 wird in x- und/oder y-Richtung mittels der Scaneinrichtung 35 relativ zum Laserkopf 17 verfahren. Durch die zusätzliche Bewegung des Laserstrahls 31 mittels der Scaneinrichtung 35 kann z.B. der Laserstrahl 31 quasi in mehrere Strahlen zerlegt werden.

Zur Bewegung des Laserkopfes 17 in y-Richtung wird dieser entlang der Führungsschiene 16 verfahren. Zur Bewegung des Laserkopfes 17 in x-Richtung wird dieser zusammen mit der Führungsschiene 16 entlang der Führungsbalken 19a;b verfahren.

Der Laserkopf 17 kann dabei z.B. in an sich bekannter Weise schrittweise bewegt werden (Kachelmodus) oder kontinuierlich.

Wie bereits erläutert, weist die erfindungsgemäße Laservorrichtung 1 Mittel zur Durchführung verschiedener Bearbeitungsverfahren auf:

### Laserablation einer Glasscheibenbeschichtung:

Erfindungsgemäß wird die Laservorrichtung 1 dazu verwendet, die oberflächliche Glasscheibenbeschichtung 23 einer Glastafel 6 mittels dem Laserstrahl 31 zumindest teilweise abzutragen (Laserablation) (Fig. 11).

Hierzu wird der Laserstrahl 31 auf die Glasscheibenbeschichtung 23 fokussiert. Beispielsweise wird der Laserstrahl 31 auf die Glasscheibenbeschichtung 23 der inneren Glastafeloberfläche 6b einer Glastafel 6 einer Isolierverglasung 26 fokussiert. Es werden einzelne oder alle Schichten der Glasscheibenbeschichtung 23 mittels des Laserstrahls 31 zumindest bereichsweise vollständig abgetragen, insbesondere verdampft bzw. verbrannt.

Sollte die Glastafel 6 eine zusätzliche Schutzbeschichtung aus Kunststoff aufweisen, kann diese vorher, insbesondere mechanisch oder mittels Laserstrahlung, oder gleichzeitig bzw. zusammen mit der Glasscheibenbeschichtung 23 abgetragen werden.

Gegebenenfalls wird das mittels Laserablation abgetragene Material zudem mittels der Absaugeinrichtung 21 abgesaugt. Dies insbesondere dann, wenn die bearbeitete Glastafeloberfläche 6a;b frei liegend ist bzw. von außen zugänglich ist.

Beispielsweise kann mittels der Laserablation der Glasscheibenbeschichtung 23 in der Glasscheibenbeschichtung 23 eine mobilfunkdurchlässige Struktur in einer Glastafel 6, bevorzugt einer Glastafel 6 eines Zugfensters 45, erzeugt werden.

Des Weiteren kann mittels der Laserablation der Glasscheibenbeschichtung 23 in der Glasscheibenbeschichtung 23 eine radardämpfende Struktur in einer Glastafel 6, bevorzugt einer Glastafel 6 eines Zugfensters 45, erzeugt werden. Insbesondere kann auch eine Vogelschutzstruktur erzeugt werden. Dabei handelt es sich um eine optische Struktur bzw. ein optisches Muster, welches Vögel als ein deutliches Hindernis wahrnehmen. Vorzugsweise wird eine Vogelschutzstruktur gemäß der DE 10 2014 002 644 A1 erzeugt.

Auch kann eine elektronische Struktur, z.B. eine Alarmschleife oder ein Schalter oder eine elektronische Struktur eines Heizglases, erzeugt werden. Vorzugsweise wird eine elektronische Struktur gemäß der WO 2020/079252 A2 erzeugt.

Des Weiteren kann eine Randentschichtung einer Glastafel 6 durchgeführt werden. Vorzugsweise erfolgt die Randentschichtung gemäß der DE 10 2018 107 697 A1. Es wird hierbei die Schutzbeschichtung und/oder die Funktionsbeschichtung mittels der Laserstrahlung abgetragen. Oder die Randentschichtung erfolgt gemäß der DE 10 2019 213 603 A1, wobei beschichtungsrückstände abgetragen werden mittels der Laserstrahlung.

Des Weiteren kann selbstverständlich auch eine Markierung, vorzugsweise eine maschinenlesbare Markierung, bevorzugt ein maschinenlesbarer Code, bevorzugt ein Data-Matrix-Code (DCM) oder ein Barcode oder ein QR Code erzeugt werden.

Zudem kann ein Fassadenelement gemäß der DE 10 2014 014 889 A1 erzeugt werden.

### Lasermodifikation einer Glasscheibenbeschichtung:

Zudem wird die erfindungsgemäße Laservorrichtung 1 dazu verwendet, die oberflächliche Glasscheibenbeschichtung 23 einer Glastafel 6 mittels dem Laserstrahl 31 zu modifizieren (Lasermodifikation) (Fig. 12). Bei der Lasermodifikation werden einzelne oder alle Schichten der Glasscheibenbeschichtung 23 mittels des Laserstrahls 31 zumindest bereichsweise derart verändert (=modifiziert), dass sie nicht mehr elektrisch leitfähig, also elektrisch isolierend, sind und/oder verfärbt sind. Lasermodifikation meint also Änderung bzw. Modifikation der elektrischen und/oder optischen und/oder mechanischen Eigenschaften einzelner oder aller Schichten der Glasscheibenbeschichtung 23.

Auch hierzu wird der Laserstrahl 31 auf die Glasscheibenbeschichtung 23 fokussiert, beispielsweise auf die Glasscheibenbeschichtung 23 der inneren Glastafeloberfläche 6b einer Glastafel 6 einer Isolierverglasung 26.

Soll die Glasscheibenbeschichtung 23 nur modifiziert werden, erfolgt die Bestrahlung somit unterhalb der Abtragsschwelle. Bei der Modifizierung wird somit kein Material abgetragen. Insbesondere wird bei der Modifizierung die Zusammensetzung der Glasscheibenbeschichtung 23 chemisch und/oder physikalisch geändert. Beispielsweise kann die Glasscheibenbeschichtung 23 Schicht(en) aus atomarem Silber aufweisen, die unter Einwirkung des Laserstrahls 31 so verändert werden, dass die Silberatome agglomerieren und Nanopartikel bilden. Dadurch verliert die Schicht aus atomarem Silber ihre elektrische Leitfähigkeit und wird isolierend. Vorzugsweise sind die Schicht(en) aus atomarem Silber eingebettet in als Schutzschichten ausgebildete, bevorzugt elektrisch isolierende, Schichten, z.B. aus Metalloxid, insbesondere aus Zinnoxid.

Die Laserleistung und/oder die Wellenlänge des Laserstrahls 31 wird somit je nach dem gewünschten Ergebnis und je nach der zu bearbeitenden Schicht(en) jeweils angepasst.

Die Lasermodifikation kann vorzugsweise gemäß der DE 10 2005 025 982 A1 erfolgen.

Weist die Glastafel 6 vor der Lasermodifikation über der Glasscheibenbeschichtung 23 eine an sich bekannte Schutzbeschichtung aus Kunststoff auf, kann vor der Lasermodifikation die Schutzbeschichtung entfernt werden, z.B. auch mittels Laserstrahlung und/oder mechanisch. Oder die Schutzbeschichtung wird während der Lasermodifikation durch die Laserstrahlung entfernt, indem sie durch die Laserstrahlung abgetragen, vorzugsweise verbrannt wird. Insbesondere erfolgt die Lasermodifikation analog wie in der DE 10 2018 207 181 A1 beschrieben.

Beispielsweise kann mittels der Lasermodifikation der Glasscheibenbeschichtung 23 ebenfalls in der Glasscheibenbeschichtung 23 eine mobilfunkdurchlässige Struktur in einer Glastafel 6, bevorzugt einer Glastafel 6 eines Zugfensters 45, erzeugt werden.

Des Weiteren kann mittels der Lasermodifikation der Glasscheibenbeschichtung 23 in der Glasscheibenbeschichtung 23 eine radardämpfende Struktur in einer Glastafel 6, bevorzugt einer Glastafel 6 eines Zugfensters 45, erzeugt werden.

Insbesondere kann auch mittels der Lasermodifikation eine Vogelschutzstruktur erzeugt werden. Vorzugsweise wird eine Vogelschutzstruktur gemäß der DE 10 2014 002 644 A1 erzeugt.

Auch kann ebenfalls eine elektronische Struktur, z.B. eine Alarmschleife oder ein Schalter oder eine elektronische Struktur eines Heizglases, erzeugt werden. Vorzugsweise wird eine elektronische Struktur gemäß der WO 2020/079252 A2 erzeugt.

Des Weiteren kann selbstverständlich auch eine Markierung, vorzugsweise eine maschinenlesbare Markierung, bevorzugt ein maschinenlesbarer Code, bevorzugt ein Data-Matrix-Code (DCM) oder ein Barcode oder ein QR Code erzeugt werden.

Außerdem können Dekorelemente erzeugt werden.

### Lasertransferdruck:

Zudem wird die erfindungsgemäße Laservorrichtung 1 dazu verwendet, eine Glastafeloberfläche 6a der Glastafel 6 mittels Lasertransferdruck zu beschichten (Fig. 14). Beispielsweise wird mittels Lasertransferdruck eine elektronische Struktur oder eine farbige Struktur, insbesondere eine farbige Markierung, aufgebracht.

Die Erzeugung der Struktur erfolgt durch Aufbringen eines, vorzugsweise elektrisch leitfähigen, Beschichtungsmaterials auf die Glastafeloberfläche 6a mittels der Lasertransferdruckeinrichtung 36. Die Glastafeloberfläche 6a wird also mit dem Beschichtungsmaterial beschichtet.

Zur Beschichtung wird das Trägermedium 37 mit seiner beschichteten Seite mittels des Andruckrahmens 39 an die zu beschichtende Glastafeloberfläche 6a der Glastafel 6 angedrückt. Dadurch wird die Trägermediumbeschichtung an die Glastafel 6 angedrückt. Dann wird mittels des auf die Trägermediumbeschichtung fokussierten Laserstrahls 31 Beschichtungsmaterial aus der Trägermediumbeschichtung auf die Glastafel 6 übertragen und an dieser fixiert. Dadurch, dass die Laserstrahlung von dem Beschichtungsmaterial absorbiert wird, wird dieses von dem Trägermedium 37 gelöst und auf die zu beschichtende Glastafeloberfläche 6a befördert.

Dabei kann das Trägermedium 37 mittels der Führungsrollen 38 relativ zu dem Laserstrahl 31 derart bewegt werden, dass der Laserstrahl 31 immer auf beschichtetes Trägermedium 37 bzw. die Trägermediumbeschichtung und nicht auf Bereiche trifft, in denen die Trägermediumbeschichtung bereits (teilweise) abgetragen wurde. Alternativ dazu oder zusätzlich kann der Laserstrahl 31 relativ zum Trägermedium 37 in x- und/oder y-Richtung bewegt werden. Die Bewegung des Laserstrahls 31 in x- und/oder y-Richtung relativ zum Trägermedium 37 erfolgt vorzugsweise mittels der Scaneinrichtung 35. Dies ist an sich bekannt.

Für den Fall, dass keine Schutzbeschichtung aus Kunststoff auf der Glastafeloberfläche 6a vorhanden ist wird die Struktur vorzugsweise gemäß dem Verfahren gemäß der DE 10 2005 026 038 A1 oder der DE 10 2011 085 714 A1 aufgebracht.

Für den Fall, dass auf der Glastafeloberfläche 6a eine Schutzbeschichtung vorgesehen ist, wird die Struktur bevorzugt mit dem Verfahren gemäß der DE 10 2018 207 181 A1 aufgebracht. Das heißt, die Schutzbeschichtung wird mittels Laserstrahlung abgetragen, bevorzugt verbrannt bzw. weggebrannt, und im gleichen Arbeitsgang wird Beschichtungsmaterial von dem Spender- bzw. Trägermedium 37 mittels der Laserstrahlung auf eine frei gelegte Oberfläche der Glastafel 6 aufgebracht, insbesondere aufgedruckt, die sich zuvor unterhalb der Schutzbeschichtung der Glastafel 6 befunden hat. Dabei wird das die oberflächliche Trägermediumbeschichtung aus dem Beschichtungsmaterial aufweisende Trägermedium 37 mit seiner beschichteten Seite in dem zu beschichtenden Bereich mit der Schutzbeschichtung der Glastafel 6 in Kontakt gebracht. Dann wird mittels der Laserstrahlung die Schutzbeschichtung abgetragen und wie beschrieben das Trägermediumbeschichtungsmaterial aus der Trägermediumbeschichtung auf die Glastafeloberfläche 6a übertragen und an dieser fixiert.

Zudem kann die Struktur auch mittels Lasertransferdruck auf eine beschichtete Glastafeloberfläche 6a;b aufgebracht werden. Zum Beispiel kann die Struktur auf die Glasscheibenbeschichtung 23 aufgebracht werden.

Mittels Lasertransferdruck kann insbesondere eine Vogelschutzstruktur erzeugt werden. Vorzugsweise wird eine Vogelschutzstruktur gemäß der DE 10 2014 002 644 A1 erzeugt.

Auch kann ebenfalls eine elektronische Struktur, z.B. eine Alarmschleife oder ein Schalter oder eine elektronische Struktur eines Heizglases, erzeugt werden. Insbesondere können Leiterbahnen aufgebracht werden.

Des Weiteren kann selbstverständlich auch eine Markierung, vorzugsweise eine maschinenlesbare Markierung, bevorzugt ein maschinenlesbarer Code, bevorzugt ein Data-Matrix-Code (DCM) oder ein Barcode oder ein QR Code aufgebracht werden.

Außerdem können Dekorelemente und Rahmen aufgebracht werden.

Zudem kann auch eine biozid wirkenden Glastafeloberfläche 6a;b gemäß der DE 10 2016 125 544 A1 erzeugt werden.

### Kombination der Bearbeitungsverfahren:

Die vorgenannten Verfahren können auch beliebig miteinander kombiniert werden und die Struktur durch eine Kombination eines oder mehrerer der oben beschriebenen Verfahren erzeugt werden. Beispielsweise kann die Glasscheibenbeschichtung 23 abgetragen und/oder modifiziert werden und darauf eine weitere Struktur mittels Lasertransferdruck aufgebracht werden.

### Laserbehandlung einer Kunststoffzwischenschicht einer Verbundglastafel:

Zudem wird die erfindungsgemäße Laservorrichtung 1 vorzugsweise dazu verwendet, die Kunststoffzwischenschicht 24 einer Verbundglastafel 25 mittels dem Laserstrahl 31 zu modifizieren oder diese zu verbrennen (Fig. 13). Insbesondere werden beim Modifizieren die optischen und/oder mechanischen Eigenschaften der Kunststoffzwischenschicht 24 modifiziert. Insbesondere wird sie verfärbt. Vorzugsweise wird die Kunststoffzwischenschicht 24 aber verbrannt

Zur Laserbehandlung wird der Laserstrahl 31 auf die Kunststoffzwischenschicht 24 fokussiert, also zwischen die beiden Glasscheiben 22.

Auch mittels der Laserbehandlung der Kunststoffzwischenschicht 24 kann eine Markierung oder ein Dekorelement erzeugt werden.

Zudem kann ein Notausstiegfenster erzeugt werden, das heraus genommen werden kann.

### Erzeugen und/oder Löschen einer Innenmarkierung oder Flächenmarkierung:

Zudem kann die erfindungsgemäße Laservorrichtung 1 auch zur laserinduziertes Erzeugen einer Innenmarkierung in der Glastafel 6, vorzugsweise durch Bildung von Farbzentren, bevorzugt mittels ultrakurz gepulster Laserstrahlung, verwendet werden. Hierzu muss eine andere Laserstrahlungsquelle 30 verwendet werden als bei den vorher beschriebenen Verfahren.

Zudem kann die erfindungsgemäße Laservorrichtung 1 auch zum laserinduzierten Erzeugen einer Flächenmarkierung an einer Glastafeloberfläche 6a bzw. Glasscheibenoberfläche 22a;b durch Lasergravur, bevorzugt mittels ultrakurz gepulster Laserstrahlung, verwendet werden Bei der Lasergravur wird die zu markierende Glastafel 6 bzw. das Glas an der zu markierenden Glastafeloberfläche 6a;b bzw. Glasscheibenoberfläche 22a;b mittels Laserstrahlung abgetragen.

Zudem kann die erfindungsgemäße Laservorrichtung 1 auch zum Löschen der Markierung mittels Laserstrahlung verwendet werden.

Vorzugsweise kann die Markierung und/oder das Löschen der Markierung wie in der DE 10 2020 215 234 A1 oder der DE 10 2020 215 235 A1 beschrieben erfolgen.

Vorteil der erfindungsgemäßen mobilen Laservorrichtung 1 ist, dass sie flexibel für unterschiedliche Bearbeitungsverfahren und an verschiedenen Einsatzorten verwendbar ist. Sie ist zudem einfach zu transportieren und somit verwendbar, um bereits eingebaute Glastafeln 6 zu bearbeiten. Wie bereits erläutert können Glastafeln 6 eines Zugfensters 45 oder eines Fensters in Bürogebäuden im eingebauten Zustand bearbeitet werden.

Aufgrund der Abstandsmesseinrichtung 49 und der optischen z-Fokusverstellungseinrichtung 34 können zudem erst bereits eingebaute Glastafeln 6 präzise bearbeitet werden und die unterschiedlichen Bearbeitungsverfahren mit teilweise anderer Fokuslage durchgeführt werden. Die erfindungsgemäße mobile Laservorrichtung 1 ist dadurch sehr flexibel verwendbar.

Auch aufgrund der zahlreichen auswechselbaren Komponenten, kann die Laservorrichtung 1 schnell und einfach umgerüstet werden.

Im Rahmen der Erfindung liegt es dabei selbstverständlich auch, dass das Laserportal 2 während der Bearbeitung der Glastafel 6 vom Transport- und Positioniergestell 3 entkoppelt ist. Auch kann das Transport- und Positioniergestell 3 ganz entfallen und die mobile Laservorrichtung 1 mittels anderer Transportmittel zur zu bearbeitenden Glastafel 6 transportiert werden, z.B. mittels einer Drohne. Zudem muss das Transport- und Positioniergestell 3 nicht rollbar sein, sondern kann auch mittels einer Luftkissenbahn bewegt werden.

Zudem muss die Steuereinrichtung 4 nicht am Transport- und Positioniergestell 3 gelagert sein. Es kommt nur darauf an, dass die Steuereinrichtung 4 derart mit den jeweiligen Bauteilen bzw. Komponenten des Laserportals 2, insbesondere dem Laserkopf 17 und den Antriebsmitteln zum Antrieb des Laserkopfs 17 in x-,y- und z-Richtung, diese steuernd in Verbindung steht. Die Verbindung kann kabelgebunden sein oder, wenn dies nicht z.B. auch eine Funkverbindung. Hierzu weisen die jeweiligen Bauteile bzw. Komponenten dann entsprechende Empfänger auf.

Im Rahmen der Erfindung liegt es zudem auch, dass die Lasergrundeinheit 50 mehrere Laserköpfe 17, bevorzugt zwei Laserköpfe 17, aufweist.

Auch kann die die Lasergrundeinheit 50 mehrere, bevorzugt zwei, Abstandmesseinrichtungen 49 aufweisen.

Des Weiteren liegt es auch im Rahmen der Erfindung, dass lediglich die dem Laserkopf 17 zugewandte Glastafeloberseite 6a in z-Richtung vermessen wird, wenn der Aufbau der Glastafel 6 in Dickenrichtung, also insbesondere die Dicke der Glastafel 6 und/oder der einzelnen Glasscheiben 22 und der Kunststoffzwischenschicht 24 bekannt sind. Denn dann kann deren Lage in z-Richtung berechnet werden.

Abschließend wird darauf hingewiesen, dass alle genannten, insbesondere beanspruchten, Merkmale der Laservorrichtung und der Bearbeitungsverfahren und der Verwendungen für sich genommen und in jeglicher Kombination besonders vorteilhaft und Gegenstand der vorliegenden Erfindung im Rahmen der vorliegenden Ansprüche sind. Zudem sind die jeweils angegebenen Ober- und Untergrenzen der einzelnen Bereichsangaben erfindungsgemäß alle miteinander kombinierbar.

## Patentansprüche

1. Mobile Laservorrichtung (1) zur Bearbeitung von in einem Objekt, vorzugsweise einem Fahrzeug, bevorzugt einem Zug, oder einem Bauwerk, bevorzugt einem Gebäude, eingebauten, mindestens eine Glasscheibe (22) aufweisenden, Glastafeln (6) mittels Laserstrahlung an unterschiedlichen Einsatzorten, aufweisend ein Laserportal (2) mit
a) einem Portalgrundrahmen (15),
b) einer an dem Portalgrundrahmen (15) in eine x-, y-, und z-Richtung des Laserportals (2) relativ zum Portalgrundrahmen (15) hin- und her verfahrbaren Lasereinheit (5) mit einem Laserkopf (17) mit einer, vorzugsweise auswechselbaren, Laserstrahlungsquelle (30) zur Bereitstellung eines Laserstrahls (31),
c) vorzugsweise einer die Lasereinheit (50) abdeckenden Laserschutzhaube (14) zum Schutz der Umgebung vor Laserstrahlung,
und
d) Befestigungsmitteln zur festen aber lösbaren Befestigung des Laserportals (2) an dem Objekt,
wobei die Lasereinheit (50) eine Abstandsmesseinrichtung (49) zur Vermessung der zu bearbeitenden Glastafel (6) in z-Richtung aufweist, **dadurch gekennzeichnet, dass**
die Lasereinheit (50) eine x-y-Messeinrichtung (46), bevorzugt eine Kamera, zur Vermessung der äußeren Abmessungen der zu bearbeitenden Glastafel (6), insbesondere einer Glastafelkante (6c), in die x- und y-Richtung des Laserportals (2) aufweist,
wobei der Laserkopf (17) eine optische z-Fokusverstellungseinrichtung (34) zur automatisierten Verschiebung eines Laserfokus (31a) des Laserstrahls (31) entlang einer optischen z-Achse (17a) des Laserkopfes (17) während der Bearbeitung der Glastafel (6) aufweist, wobei die optische z-Fokusverstellungseinrichtung (34) eine Optik, vorzugsweise ein Linsensystem, aufweist, und
die Laservorrichtung (1) eine Steuereinrichtung (4) zur automatisierten Steuerung des jeweils durchzuführenden Bearbeitungsverfahrens und Verarbeitung der Messdaten der Abstandmesseinrichtung (49) und der x-y-Messeinrichtung (46) aufweist, wobei die Steuereinrichtung (4) eingerichtet ist, die optische z-Fokusverstellungseinrichtung (34) auf Basis der Messergebnisse der Abstandsmesseinrichtung (49) und der x-y-Messeinrichtung (46) zu steuern.

2. Mobile Laservorrichtung (1) nach Anspruch 1,
**dadurch gekennzeichnet, dass**
die Abstandsmesseinrichtung (49) eine Messeinrichtungslaserstrahlungsquelle zur Erzeugung eines Messlaserstrahls und einen Laserstrahldetektor, vorzugsweise einen Zeilensensor, zur Detektion von Laserstrahlreflexen des Messlaserstrahls aufweist.

3. Mobile Laservorrichtung (1) nach Anspruch 1 oder 2,
**dadurch gekennzeichnet, dass**
die Laservorrichtung (1) mindestens eins, vorzugsweise mindestens zwei, der nachfolgenden Mittel aufweist:
a) Mittel zur Lasermodifikation einer Glasscheibenbeschichtung (23) einer Glasscheibe (22) von Glastafeln (6),
b) eine Lasertransferdruckeinrichtung (36) zum Beschichten von Glastafeln (6), insbesondere einer Glastafeloberfläche (6a), mittels Lasertransferdruck,
c) Mittel zur Laserablation der Glasscheibenbeschichtung (23) einer Glasscheibe (22) von Glastafeln (6),
d) Mittel zur Laserbehandlung einer Kunststoffzwischenschicht (24) von Verbundglastafeln (25),
e) Mittel zur Lasergravur einer Glasscheibenoberfläche (22a;b) einer Glasscheibe (22) von Glastafeln (6),
f) Mittel zur Erzeugen einer Innenmodifikation in Glastafeln (6),
g) Mittel zur Erzeugen einer Innengravur in Glastafeln (6)
h) Mittel zum Löschen der Innenmodifikation,
i) Mittel zum Löschen der Lasergravur der Glasscheibenoberfläche (22a;b).

4. Mobile Laservorrichtung (1) nach Anspruch 3,
**dadurch gekennzeichnet, dass**
die Laservorrichtung (1) Mittel zur wahlweisen Positionierung der Lasertransferdruckeinrichtung (36) im Strahlengang oder außerhalb des Strahlengangs des Laserstrahls (31) aufweist.

5. Mobile Laservorrichtung (1) nach einem der vorhergehenden Ansprüche,
**dadurch gekennzeichnet, dass**
der Laserkopf (17) eine Scaneinrichtung (35) zur Bewegen des Laserstrahls (31) in einem Scanfeld in die x- und y-Richtung aufweist, wobei die Scaneinrichtung (35) vorzugsweise eine Scanoptik zur Bewegen des Laserstrahls (31) in dem Scanfeld aufweist,
wobei die Scaneinrichtung (35) vorzugsweise der optischen z-Fokusverstellungseinrichtung (34) nachgeordnet ist.

6. Mobile Laservorrichtung (1) nach einem der vorhergehenden Ansprüche,
**dadurch gekennzeichnet, dass**
der Laserkopf (17), vorzugsweise die Scaneinrichtung (35), ein, vorzugsweise auswechselbares, Objektiv (47) zur Fokussierung des Laserstrahls (31) aufweist, wobei das Objektiv (47) vorzugsweise kurzbrennweitig ist und bevorzugt eine Brennweite von 20 bis 200 mm, besonders bevorzugt von 80 bis 160 mm, aufweist.

7. Mobile Laservorrichtung (1) nach einem der vorhergehenden Ansprüche,
**dadurch gekennzeichnet, dass**
a) der Laserkopf (17) eine Strahlformungseinrichtung (32) zur geometrischen Strahlformung des Laserstrahls (31) aufweist, wobei der Laserkopf (17) vorzugsweise Mittel zur wahlweisen Positionierung der Strahlformungseinrichtung (32) im Strahlengang oder außerhalb des Strahlengangs des Laserstrahls (31) aufweist,
und/oder
b) der Laserkopf (17) eine Energieverteilungseinrichtung (33) zur Anpassung der Energieverteilung des Laserstrahls (31) aufweist, wobei der Laserkopf (17) vorzugsweise Mittel zur wahlweisen Positionierung der Energieverteilungseinrichtung (33) im Strahlengang oder außerhalb des Strahlengangs des Laserstrahls (31) aufweist.

8. Mobile Laservorrichtung (1) nach einem der vorhergehenden Ansprüche,
**dadurch gekennzeichnet, dass**
die Laservorrichtung (1) eine Laserschutzeinrichtung (5) zur Anordnung auf der dem Laserportal (2) gegenüberliegenden Seite der Glastafel (6) zum Schutz der Umgebung vor Laserstrahlung aufweist,
wobei die Laserschutzeinrichtung (5) vorzugsweise ein Laserschutzelement (40), bevorzugt einen Laserschutzvorhang (41), sowie eine Detektiereinrichtung zum Detektieren der ordnungsgemäßen Positionierung des Laserschutzelements (40) aufweist, wobei die Detektiereinrichtung vorzugsweise mit der Steuereinrichtung (4) in Verbindung steht und die Steuereinrichtung (4) vorzugsweise so eingerichtet ist, dass die Laserstrahlungsquelle (30) nur in Gang gesetzt und/oder betrieben werden kann, wenn mittels der Detektiereinrichtung eine ordnungsgemäße Positionierung des Laserschutzelements (40), vorzugsweise des Laserschutzvorhangs (41), detektiert ist.

9. Mobile Laservorrichtung (1) nach einem der vorhergehenden Ansprüche,
**dadurch gekennzeichnet, dass**
die Laservorrichtung (1) ein Transport- und Positioniergestell (3) zum Aufstellen und vorzugsweise Verfahren der mobilen Laservorrichtung (1) auf einem Untergrund aufweist und das Laserportal (2) in eine, insbesondere vertikale, Gestellhöhenrichtung (3a), hin- und her verfahrbar mit dem Transport- und Positioniergestell (3) in Verbindung steht, wobei die Laservorrichtung (1) vorzugsweise Antriebsmittel aufweist, mit denen das Laserportal (2) in die Gestellhöhenrichtung (3a) hin- und her antreibbar in Verbindung steht,
wobei vorzugsweise das Laserportal (2) um eine, bevorzugt horizontale, Laserportaldrehachse (2a) drehbar mit dem Transport- und Positioniergestell (3) in Verbindung steht, wobei die Laservorrichtung (1) vorzugsweise Antriebsmittel aufweist, mit denen das Laserportal (2) um die Laserportaldrehachse (2a) hin- und her drehbar antreibbar in Verbindung steht.

10. Mobile Laservorrichtung (1) nach einem der Ansprüche 3 bis 9,
**dadurch gekennzeichnet, dass**
die Lasertransferdruckeinrichtung (36) ein, bevorzugt bandförmiges, Trägermedium (37), insbesondere eine bandförmige Trägerfolie, mit einer Trägermediumbeschichtung und einen Andruckrahmen (39) zum Andrücken des Trägermediums (37) an die zu markierende Glastafel (6) aufweist,
wobei vorzugsweise die Lasertransferdruckeinrichtung (36) Mittel, insbesondere mehrere antreibbare Führungsrollen (38), zum Antrieb des Trägermediums (37) relativ zum Laserstrahl (31) und/oder zum Andruckrahmen (39) aufweist.

11. Mobile Laservorrichtung (1) nach einem der vorhergehenden Ansprüche,
**dadurch gekennzeichnet, dass**
die Lasereinheit (50) eine Absaugeinrichtung (21) zum Absaugen von mittels der Laserstrahlung abgetragenem Material aufweist.

12. Verwendung einer mobilen Laservorrichtung (1) gemäß einem der vorhergehenden Ansprüche zur Bearbeitung einer in einem Objekt, vorzugsweise einem Bauwerk, bevorzugt einem Gebäude, oder einem Fahrzeug, bevorzugt einem Zug, eingebauten, mindestens eine Glasscheibe (22) aufweisenden, Glastafel (6) mittels Laserstrahlung.

13. Verwendung nach Anspruch 12,
**dadurch gekennzeichnet, dass**
die Laservorrichtung (1) für eins der nachfolgenden Verfahren verwendet wird:
a) zur Lasermodifikation einer Glasscheibenbeschichtung (23) einer Glasscheibe (22) der Glastafel (6),
b) zum Beschichten der Glastafel (6), insbesondere einer Glastafeloberfläche (6a;b), mittels Lasertransferdruck,
c) zur Laserablation einer Glasscheibenbeschichtung (23) einer Glasscheibe (22) der Glastafel (6),
d) zur Laserbehandlung einer Kunststoffzwischenschicht (24) einer Verbundglastafel (25),
e) zur Lasergravur einer Glasscheibenoberfläche (22a;b) einer Glasscheibe (22) der Glastafel (6),
f) zum Erzeugen einer Innenmodifikation in der Glastafel (6).
g) zur Erzeugen einer Innengravur in der Glastafel (6),
h) zum Löschen der Innenmodifikation,
i) zum Löschen der Lasergravur der Glasscheibenoberfläche (22a;b).

## Claims

1. Mobile laser device (1) for processing glass sheets (6) installed in an object, preferably a vehicle, more preferably a train, or a structure work, preferably a building, and comprising at least one glass pane (22), by means of laser radiation at different places of use, having a laser gantry (2) with
a) a gantry base frame (15),
b) a laser unit (5) movable back and forth on the gantry base frame (15) in an x, y and z direction of the laser gantry (2) relative to the gantry base frame (15), having a laser head (17) with a, preferably interchangeable, laser radiation source (30) for providing a laser beam (31),
c) preferably a laser protection bonnet (14) covering the laser unit (50) to protect the environment from laser radiation,
and
d) Fastening means for fixed but detachable attachment of the laser gantry (2) to the object,
wherein the laser unit (50) comprises a distance measuring device (49) for measuring the glass sheet (6) to be processed in the z-direction,
**characterized in that**
the laser unit (50) comprises an x-y measuring device (46), preferably a camera, for measuring the outer dimensions of the glass sheet (6) to be processed, in particular for measuring a glass sheet edge (6c), in the x and y directions of the laser gantry (2),
wherein the laser head (17) comprises an optical z-focus adjustment device (34) for the automated displacement of a laser focus (31a) of the laser beam (31) along an optical z-axis (17a) of the laser head (17) during the processing of the glass sheet (6),
wherein the optical z-focus adjustment device (34) comprises an optics, preferably a lens system, and
the laser device (1) comprises a control device (4) for the automated control of the respective processing method to be carried out and for processing of the measurement data of the distance measuring device (49) and of the x-y measuring device (46), wherein the control device (4) is configured to control the optical z-focus adjustment device (34) on the basis of the measurement results of the distance measuring device (49) and of the x-y measuring device (46).

2. Mobile laser device (1) according to claim 1,
**characterized in that**
the distance measuring device (49) comprises a measuring device laser beam source for generating a measuring laser beam and a laser beam detector, preferably a line sensor, for detecting laser beam reflections of the measuring laser beam.

3. Mobile laser device (1) according to claim 1 or 2,
**characterized in that**
the laser device (1) comprises at least one, preferably at least two, of the following means:
a) Means for laser modification of a glass pane coating (23) of a glass pane (22) of glass sheets (6),
b) a laser transfer printing device (36) for coating glass sheets (6), in particular a glass sheet surface (6a), by means of laser transfer printing,
c) Means for laser ablation of the glass pane coating (23) of a glass pane (22) of glass sheets (6),
d) Means for laser treatment of a plastic interlayer (24) of laminated glass sheets (25),
e) Means for laser engraving of a glass pane surface (22a;b) of a glass pane (22) of glass sheets (6),
f) Means for producing an internal modification in glass sheets (6),
g) Means for producing an internal engraving in glass sheets (6)
h) Means for deleting the internal modification,
i) Means for deleting the laser engraving of the glass pane surface (22a;b).

4. Mobile laser device (1) according to claim 3,
**characterized in that**
the laser device (1) comprises means for selectively positioning the laser transfer printing device (36) in the beam path or outside the beam path of the laser beam (31).

5. Mobile laser device (1) according to one of the preceding claims,
**characterized in that**
the laser head (17) comprises a scanning device (35) for moving the laser beam (31) in a scanning field in the x and y directions, the scanning device (35) preferably having a scanning optics for moving the laser beam (31) in the scanning field,
wherein preferably the scanning device (35) is arranged downstream of the optical z-focus adjustment device (34).

6. Mobile laser device (1) according to one of the preceding claims,
**characterized in that**
the laser head (17), preferably the scanning device (35), comprises a, preferably interchangeable, objective (47) for focusing the laser beam (31), wherein the objective (47) is preferably short focal length and more preferably comprises a focal length of 20 to 200 mm, particularly preferably of 80 to 160 mm.

7. Mobile laser device (1) according to one of the preceding claims,
**characterized in that**
a) the laser head (17) comprises a beam shaping device (32) for geometric beam shaping of the laser beam (31), wherein the laser head (17) preferably comprises means for selective positioning of the beam shaping device (32) in the beam path or outside the beam path of the laser beam (31),
and/or
b) the laser head (17) comprises an energy distribution device (33) for adapting the energy distribution of the laser beam (31), the laser head (17) preferably comprising means for selectively positioning the energy distribution device (33) in the beam path or outside the beam path of the laser beam (31).

8. Mobile laser device (1) according to one of the preceding claims,
**characterized in that**
the laser device (1) comprises a laser safety device (5) for arrangement on the side of the glass sheet (6) opposite the laser gantry (2) to protect the surroundings from laser radiation,
wherein the laser safety device (5) preferably comprises a laser protection element (40), preferably a laser protection curtain (41), and a detection device for detecting the correct positioning of the laser protection element (40), the detection device preferably being connected to the control device (4) and the control device (4) preferably being configured in such a way that the laser radiation source (30) can only be started up and/or operated if correct positioning of the laser protection element (40), preferably of the laser protection curtain (41), is detected by means of the detection device.

9. Mobile laser device (1) according to one of the preceding claims,
**characterized in that**
the laser device (1) comprises a transport and positioning rack (3) for setting up and preferably moving the mobile laser device (1) on an underground and the laser gantry (2) is connected to the transport and positioning rack (3) so as to be movable back and forth in a, in particular vertical, rack height direction (3a), the laser device (1) preferably having drive means with which the laser gantry (2) is connected so as to be drivable back and forth in the rack height direction (3a),
wherein preferably the laser gantry (2) is connected to the transport and positioning rack (3) so as to be rotatable about a, preferably horizontal, laser gantry axis of rotation (2a), wherein the laser device (1) preferably comprises drive means with which the laser gantry (2) is driveable connected so as to rotate back and forth about the laser gantry axis of rotation (2a).

10. Mobile laser device (1) according to one of the claims 3 to 9,
**characterized in that**
the laser transfer printing device (36) comprises a, preferably tape-shaped carrier medium (37), in particular a tape-shaped carrier film, with a carrier medium coating and a pressure frame (39) for pressing the carrier medium (37) onto the glass sheet (6) to be marked,
wherein preferably the laser transfer printing device (36) comprises means, in particular a plurality of drivable guide rollers (38), for driving the carrier medium (37) relative to the laser beam (31) and/or to the pressure frame (39).

11. Mobile laser device (1) according to one of the preceding claims,
**characterized in that**
the laser unit (50) comprises a suction device (21) for sucking material removed by means of the laser radiation.

12. Use of a mobile laser device (1) according to one of the preceding claims for processing a glass sheet (6) having at least one glass pane (22) and installed in an object, preferably in a structure work, more preferably in a building, or in a vehicle, preferably in a train, by means of laser radiation.

13. Use according to claim 12,
**characterized in that**
the laser device (1) is used for one of the following methods:
a) for laser modification of a glass pane coating (23) of a glass pane (22) of the glass sheet (6),
b) for coating the glass sheet (6), in particular a glass sheet surface (6a;b), by means of laser transfer printing,
c) for laser ablation of a glass pane coating (23) of a glass pane (22) of the glass sheet (6),
d) for laser treatment of a plastic interlayer (24) of a laminated glass sheet (25),
e) for laser engraving of a glass pane surface (22a;b) of a glass pane (22) of the glass sheet (6),
f) for producing an internal modification in the glass sheet (6).
g) for producing an internal engraving in the glass sheet (6),
h) for deleting the internal modification,
i) for deleting the laser engraving of the glass pane surface (22a;b).

## Revendications

1. Dispositif laser mobile (1) pour le traitement de panneaux de verre (6) comprenant au moins une vitre (22) et intégrés dans un objet, de préférence un véhicule, de préférence un train, ou un ouvrage, de préférence un bâtiment, au moyen d'un rayonnement laser à différents endroits d'utilisation, comprenant un portique laser (2) avec
a) un châssis de base de portique (15),
b) une unité laser (5) pouvant être déplacée en va-et-vient sur le châssis de base du portique (15) dans les directions x, y et z du portique laser (2) par rapport au châssis de base du portique (15), avec une tête laser (17) comprenant une source de rayonnement laser (30), de préférence remplaçable, pour fournir un faisceau laser (31),
c) de préférence d'un capot de protection laser (14) recouvrant l'unité laser (50) pour protéger l'environnement contre le rayonnement laser, et
d) des moyens de fixation pour la fixation solide mais amovible du portique laser (2) à l'objet,
où l'unité laser (50) comprend un dispositif de mesure de distance (49) pour mesurer le panneau de verre (6) à traiter dans la direction z,
**caractérisé en ce que**
l'unité laser (50) comprend un dispositif de mesure x-y (46), de préférence une caméra, pour mesurer les dimensions extérieures du panneau de verre (6) à traiter, en particulier d'un bord de panneau de verre (6c), dans les directions x et y du portique laser (2),
où la tête laser (17) comprend un dispositif optique de réglage de foyer z (34) pour le déplacement automatisé d'un foyer laser (31a) du faisceau laser (31) le long d'un axe optique z (17a) de la tête laser (17) pendant le traitement du panneau de verre (6), où le dispositif optique de réglage de foyer z (34) comprend une optique, de préférence un système de lentilles, et
le dispositif laser (1) comprend un dispositif de commande (4) pour la commande automatisée du processus de traitement respectif à effectuer et pour le traitement des données de mesure du dispositif de mesure de distance (49) et du dispositif de mesure x-y (46), où le dispositif de commande (4) est conçu pour commander le dispositif optique de réglage de foyer z (34) sur la base des résultats de mesure du dispositif de mesure de distance (49) et du dispositif de mesure x-y (46).

2. Dispositif laser mobile (1) selon la revendication 1,
**caractérisé en ce que**
le dispositif de mesure de distance (49) comprend une source de rayonnement laser de dispositif de mesure pour générer un faisceau laser de mesure et un détecteur de faisceau laser, de préférence un capteur linéaire, pour détecter les réflexions du faisceau laser de mesure.

3. Dispositif laser mobile (1) selon la revendication 1 ou 2,
**caractérisé en ce que**
le dispositif laser (1) comprend au moins un, de préférence au moins deux, des moyens suivants:
a) des moyens pour la modification laser d'un revêtement (23) de vitre d'une vitre (22) de panneaux de verre (6),
b) un dispositif d'impression par transfert laser (36) pour recouvrir des panneaux de verre (6), en particulier une surface de panneau de verre (6a), au moyen d'une impression par transfert laser,
c) des moyens pour l'ablation au laser du revêtement (23) de vitre d'une vitre (22) de panneaux de verre (6),
d) des moyens pour le traitement au laser d'une couche intermédiaire en plastique (24) de panneaux en verre feuilleté (25),
e) des moyens pour graver au laser une surface de vitre (22a;b) d'une vitre (22) de panneaux de verre (6),
f) des moyens pour réaliser une modification interne dans des panneaux de verre (6),
g) des moyens pour réaliser une gravure interne dans des panneaux de verre (6)
h) des moyens pour effacer la modification interne,
i) des moyens pour effacer la gravure laser de la surface de vitre (22a;b).

4. Dispositif laser mobile (1) selon la revendication 3,
**caractérisé en ce que**
le dispositif laser (1) comprend des moyens pour positionner de manière sélective le dispositif d'impression par transfert laser (36) dans le trajet de faisceau ou à l'extérieur du trajet de faisceau du faisceau laser (31).

5. Dispositif laser mobile (1) selon l'une des revendications précédentes,
**caractérisé en ce que**
la tête laser (17) comprend un dispositif de balayage (35) pour déplacer le faisceau laser (31) dans un champ de balayage dans les directions x et y, où le dispositif de balayage (35) comprend de préférence une optique de balayage pour déplacer le faisceau laser (31) dans le champ de balayage,
où le dispositif de balayage (35) est de préférence disposé après le dispositif de réglage optique de foyer z (34).

6. Dispositif laser mobile (1) selon l'une des revendications précédentes,
**caractérisé en ce que**
la tête laser (17), de préférence le dispositif de balayage (35), comprend un objectif (47), de préférence interchangeable, pour focaliser le faisceau laser (31), où l'objectif (47) a de préférence une courte distance focale et de préférence une distance focale de 20 à 200 mm, de préférence particulière de 80 à 160 mm.

7. Dispositif laser mobile (1) selon l'une des revendications précédentes,
**caractérisé en ce que**
a) la tête laser (17) comprend un dispositif de mise en forme de faisceau (32) pour la mise en forme de faisceau géométrique du faisceau laser (31), où la tête laser (17) comprend de préférence des moyens pour positionner au choix le dispositif de mise en forme de faisceau (32) dans le trajet de faisceau ou à l'extérieur du trajet de faisceau du faisceau laser (31),
et/ou
b) la tête laser (17) comprend un dispositif de répartition d'énergie (33) pour adapter la répartition d'énergie du faisceau laser (31), où la tête laser (17) comprend de préférence des moyens pour positionner au choix le dispositif de répartition d'énergie (33) dans le trajet de faisceau ou à l'extérieur du trajet de faisceau du faisceau laser (31).

8. Dispositif laser mobile (1) selon l'une des revendications précédentes,
**caractérisé en ce que**
le dispositif laser (1) comprend un dispositif de protection laser (5) destiné à être disposé sur le côté du panneau de verre (6) opposé au portique laser (2) afin de protéger l'environnement contre le rayonnement laser, où le dispositif de protection laser (5) comprend de préférence un élément de protection laser (40), de préférence un rideau de protection laser (41), ainsi qu'un dispositif de détection pour détecter le positionnement correct de l'élément de protection laser (40), où le dispositif de détection est de préférence relié au dispositif de commande (4) et le dispositif de commande (4) est de préférence conçu de telle sorte que la source de rayonnement laser (30) peut être mise en marche et/ou opérer seulement si le dispositif de détection détecte un positionnement correct de l'élément de protection laser (40), de préférence du rideau de protection laser (41).

9. Dispositif laser mobile (1) selon l'une des revendications précédentes,
**caractérisé en ce que**
le dispositif laser (1) comprend un châssis de transport et de positionnement (3) pour installer et de préférence déplacer le dispositif laser mobile (1) sur un support, et le portique laser (2) est relié au châssis de transport et de positionnement (3) de manière à pouvoir se déplacer en va-et-vient dans une direction, en particulier verticale, de hauteur de châssis (3a), où le dispositif laser (1) comprend de préférence des moyens d'entraînement auxquels le portique laser (2) est relié de manière à pouvoir être entraîné en va-et-vient dans la direction de hauteur (3a) de châssis,
où le portique laser (2) est de préférence relié de manière rotative au châssis de transport et de positionnement (3) autour d'un axe de rotation, de préférence horizontal, de portique laser (2a), où le dispositif laser (1) comprend de préférence des moyens d'entraînement auxquels le portique laser (2) est relié de manière à pouvoir être entraîné en rotation en va-et-vient autour de l'axe de rotation de portique laser (2a).

10. Dispositif laser mobile (1) selon l'une des revendications 3 à 9,
**caractérisé en ce que**
le dispositif d'impression par transfert laser (36) comprend un médium de support (37), de préférence en forme de bande, en particulier un film de support en forme de bande, avec un revêtement de médium de support et un cadre de pression (39) pour presser le médium de support (37) contre le panneau de verre (6) à marquer,
où le dispositif d'impression par transfert laser (36) comprend de préférence des moyens, en particulier plusieurs rouleaux de guidage entraînables (38), pour entraîner le médium de support (37) par rapport au faisceau laser (31) et/ou au cadre de pression (39).

11. Dispositif laser mobile (1) selon l'une des revendications précédentes,
**caractérisé en ce que**
l'unité laser (50) comprend un dispositif d'aspiration (21) pour aspirer le matériau enlevé par le rayonnement laser.

12. Utilisation d'un dispositif laser mobile (1) selon l'une des revendications précédentes pour le traitement d'un panneau de verre (6) intégré dans un objet, de préférence un ouvrage, de préférence un bâtiment, ou un véhicule, de préférence un train, et comprenant au moins une vitre (22), au moyen d'un rayonnement laser.

13. Utilisation selon la revendication 12,
**caractérisée en ce que**
le dispositif laser (1) est utilisé pour l'un des procédés suivants:
a) pour la modification au laser d'un revêtement de vitre (23) d'une vitre (22) du panneau de verre (6),
b) pour le revêtement du panneau de verre (6), en particulier d'une surface de panneau de verre (6a;b), au moyen d'une impression par transfert laser,
c) pour l'ablation laser d'un revêtement de vitre (23) d'une vitre (22) du panneau de verre (6),
d) pour le traitement au laser d'une couche intermédiaire en plastique (24) d'un panneau de verre feuilleté (25),
e) pour la gravure laser d'une surface de vitre (22a;b) d'une vitre (22) du panneau de verre (6),
f) pour créer une modification interne dans le panneau de verre (6).
g) pour créer une gravure interne dans le panneau de verre (6),
h) pour effacer la modification interne,
i) pour effacer la gravure laser de la surface de vitre (22a;b).
